# EUROPEAN PATENT APPLICATION

(11) **EP 4 475 507 A1**
(43) Date of publication of application: **11.12.2024**
(21) Application number: 23778172.9
(22) Date of filing: 28.03.2023
(51) Int. Cl.: H04L 41/16

(54) **COMMUNICATION METHOD AND APPARATUS**

(30) Priority: 29.03.2022 CN 202210324047
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN)
(74) Representative: Körber, Martin Hans
(86) International application number: PCT/CN2023/084300
(87) International publication number: WO 2023/185807

(57) **Abstract**

This application provides a communication method and apparatus, to improve training efficiency of federated learning. The method includes: An application function network element sends a first request message, where the first request message is used to request network status information of a terminal device in a candidate range. The application function network element obtains a first response message, where the first response message includes network status information of N1 terminal devices, the terminal device in the candidate range includes the N1 terminal devices, and N1 is a positive integer. The application function network element determines N2 terminal devices based on the network status information of the N1 terminal devices, where the N2 terminal devices are configured to participate in training of a federated learning model, the N1 terminal devices include the N2 terminal devices, and N2 is a positive integer.

## Description

### CROSS-REFERENCE TO RELATED APPLICATIONS

This application claims priority to Chinese Patent Application No. 202210324047.8, filed with the China National Intellectual Property Administration on March 29, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Federated learning (federated learning, FL) is a machine learning framework that can effectively help a plurality of users use data and perform machine learning modeling while meeting requirements on user privacy protection, data security, and government regulations. The federated learning, as a paradigm of distributed machine learning, can effectively resolve the problem of data silos. Joint modeling is performed with no user data shared, to technically break the data silos and implement artificial intelligence (artificial intelligence, AI) collaboration. However, a conventional method of the federated learning is not efficient.

### SUMMARY

Embodiments of this application provide a communication method and apparatus, to improve efficiency of federated learning.

According to a first aspect, an embodiment of this application provides a communication method, including: An application function network element sends a first request message, where the first request message is used to request network status information of a terminal device in a candidate range. The application function network element obtains a first response message, where the first response message includes network status information of N1 terminal devices, the terminal device in the candidate range includes the N1 terminal devices, and N1 is a positive integer. The application function network element determines N2 terminal devices based on the network status information of the N1 terminal devices, where the N2 terminal devices are configured to participate in training of a federated learning model, the N1 terminal devices include the N2 terminal devices, and N2 is a positive integer.

According to this design, during selection of a terminal device participating in federated learning, network status information of the terminal device is considered, to ensure a communication capability of the participant, so as to improve efficiency of the federated learning.

In a possible design, the first request message includes information indicating the candidate range, and the candidate range includes a specified network area or a list of candidate terminal devices.

In a possible design, a value of N1 falls within a specified number range. Optionally, the first request message may include first indication information, and the first indication information indicates that the value of N1 falls within the specified number range.

In a possible design, the first request message includes a value range of N1. Optionally, the value range of N1 may be the same as or different from the specified number range.

According to this design, a data provider can provide network status information of terminal devices that meet a number requirement.

In a possible design, the network status information of the N1 terminal devices is greater than or equal to a first network status information threshold. It may be understood that the application function network element may also derive that network status information of a terminal device other than the N1 terminal devices in the candidate range is less than the first network status information threshold. According to this design, signaling overheads of the first response message can be reduced.

In a possible design, that the application function network element determines N2 terminal devices based on the network status information of the N1 terminal devices includes: The application function network element determines the N2 terminal devices based on the network status information of the N1 terminal devices and application layer information of the N1 terminal devices. According to this design, an application side may select, by using the network status information of the UE and the application layer information, the UE participating in the training or an update of the federated learning model, so that an algorithm for selecting the participant based on the application layer information is optimized, thereby improving training efficiency of the federated learning model.

In a possible design, the method further includes: The application function network element obtains information about a terminal device whose network status information is abnormal in the N2 terminal devices. The application function network element obtains network status information of N3 terminal devices, where the candidate range includes the N3 terminal devices, the N3 terminal devices do not include the N2 terminal devices, and N3 is a positive integer. The application function network element determines N4 terminal devices based on the information about the terminal device whose network status information is abnormal in the N2 terminal devices and the network status information of the N3 terminal devices, where the N4 terminal devices are configured to participate in update training of the federated learning model, and N4 is a positive integer. For example, N4 is equal to N2.

According to this design, a terminal device participating in a subsequent round of federated learning is updated and determined based on a terminal device that has participated in the federated learning. Compared with a conventional technology that a terminal device participating in the federated learning is separately determined in each round, this design is faster and more convenient, and improves the efficiency of the federated learning.

In a possible design, the N4 terminal devices include a terminal device other than the terminal device whose network status information is abnormal in the N2 terminal devices.

In a possible design, that the application function network element obtains information about a terminal device whose network status information is abnormal in the N2 terminal devices includes: The application function network element sends second indication information to a network data analytics function network element, where the second indication information indicates to monitor network status information of the N2 terminal devices, the second indication information includes a second network status information threshold, and the second network status information threshold is used to determine whether service traffic information of the terminal device is abnormal. The application function network element obtains, from the network data analytics function network element, the information about the terminal device whose network status information is abnormal in the N2 terminal devices.

In a possible design, the communication method further includes: The application function network element trains the federated learning model with the N2 terminal devices.

According to a second aspect, an embodiment of this application provides a communication method. The communication method may be applied to an access and mobility management function network element or an operation, administration, and maintenance network element. An example in which the communication method is applied to the access and mobility management function network element is used. The communication method includes:
An access and mobility management function network element obtains a first request message, where the first request message is used to request network status information of a terminal device in a candidate range.

The access and mobility management function network element sends a first response message, where the first response message includes network status information of N1 terminal devices, the terminal device in the candidate range includes the N1 terminal devices, and N1 is a positive integer.

Corresponding to the first aspect, it may be understood that the network status information of the N1 terminal devices is used by an application function network element to determine N2 terminal devices participating in training of a federated learning model.

In a possible design, the first request message includes information indicating the candidate range, and the candidate range includes a specified network area or a list of candidate terminal devices.

In a possible design, a value of N1 falls within a specified number range. Optionally, the first request message may include first indication information, and the first indication information indicates that the value of N1 falls within the specified number range.

In a possible design, the first request message includes a value range of N1. Optionally, the value range of N1 may be the same as or different from the specified number range.

In a possible design, the network status information of the N1 terminal devices is greater than or equal to a first network status information threshold.

In a possible design, the communication method further includes: The access and mobility management function network element sends network status information of N3 terminal devices, where the candidate range includes the N3 terminal devices, the N3 terminal devices do not include the N2 terminal devices, and N3 is a positive integer.

According to a third aspect, an embodiment of this application provides a communication method. The communication method may be applied to a network data analytics function network element, and includes:
The network data analytics function network element obtains a first request message, where the first request message is used to request network status information of a terminal device in a candidate range.

The network data analytics function network element obtains the network status information of the terminal device in the candidate range from an access and mobility management function network element and/or an operation, administration, and maintenance network element.

The network data analytics function network element sends a first response message, where the first response message includes network status information of N1 terminal devices, the terminal device in the candidate range includes the N1 terminal devices, and N1 is a positive integer.

Corresponding to the first aspect, it may be understood that the network status information of the N1 terminal devices is used by an application function network element to determine N2 terminal devices participating in training of a federated learning model.

In a possible design, the first request message includes information indicating the candidate range, and the candidate range includes a specified network area or a list of candidate terminal devices.

In a possible design, a value of N1 falls within a specified number range. Optionally, the first request message may include first indication information, and the first indication information indicates that the value of N1 falls within the specified number range.

In a possible design, the first request message includes a value range of N1. Optionally, the value range of N1 may be the same as or different from the specified number range.

In a possible design, the network status information of the N1 terminal devices is greater than or equal to a first network status information threshold.

In a possible design, the method further includes: The network data analytics function network element receives second indication information from the application function network element, where the second indication information indicates to monitor network status information of the N2 terminal devices, the second indication information includes a second network status information threshold, and the second network status information threshold is used to determine whether service traffic information of the terminal device is abnormal. The network data analytics function network element sends, to the application function network element, information about a terminal device whose network status information is abnormal in the N2 terminal devices.

According to a fourth aspect, an embodiment of this application provides a communication apparatus. The communication apparatus may be used in an application function network element, and includes: a communication module, configured to send a first request message, where the first request message is used to request network status information of a terminal device in a candidate range, where the communication module is configured to obtain a first response message, where the first response message includes network status information of N1 terminal devices, the terminal device in the candidate range includes the N1 terminal devices, and N1 is a positive integer; and a processing module, configured to determine N2 terminal devices based on the network status information of the N1 terminal devices, where the N2 terminal devices are configured to participate in training of a federated learning model, the N1 terminal devices include the N2 terminal devices, and N2 is a positive integer.

In a possible design, the first request message includes information indicating the candidate range, and the candidate range includes a specified network area or a list of candidate terminal devices.

In a possible design, the first request message includes first indication information, and the first indication information indicates that a value of N1 falls within a specified number range.

In a possible design, the first request message includes a value range of N1.

In a possible design, the network status information of the N1 terminal devices is greater than or equal to a first network status information threshold.

In a possible design, the processing module is specifically configured to:
determine the N2 terminal devices based on the network status information of the N1 terminal devices and application layer information of the N1 terminal devices.

In a possible design, the communication module is further configured to: obtain information about a terminal device whose network status information is abnormal in the N2 terminal devices, and obtain network status information of N3 terminal devices, where the candidate range includes the N3 terminal devices, the N3 terminal devices do not include the N2 terminal devices, and N3 is a positive integer. The processing module is further configured to determine N4 terminal devices based on the information about the terminal device whose network status information is abnormal in the N2 terminal devices and the network status information of the N3 terminal devices, where the N4 terminal devices are configured to participate in update training of the federated learning model, and N4 is a positive integer.

In a possible design, the N4 terminal devices include a terminal device other than the terminal device whose network status information is abnormal in the N2 terminal devices.

In a possible design, the communication module is further configured to: send second indication information to a network data analytics function network element, where the second indication information indicates to monitor network status information of the N2 terminal devices, the second indication information includes a second network status information threshold, and the second network status information threshold is used to determine whether service traffic information of the terminal device is abnormal; and obtain, from the network data analytics function network element, the information about the terminal device whose network status information is abnormal in the N2 terminal devices.

In a possible design, the processing module is further configured to train the federated learning model with the N2 terminal devices.

According to a fifth aspect, an embodiment of this application provides a communication apparatus. The communication apparatus may be used in an access and mobility management function network element or an operation, administration, and maintenance network element, and includes:
a communication module, configured to obtain a first request message, where the first request message is used to request network status information of a terminal device in a candidate range; and
a processing module, configured to determine the network status information of the terminal device in the candidate range, where
the communication module is further configured to send a first response message, where the first response message includes network status information of N1 terminal devices, the terminal device in the candidate range includes the N1 terminal devices, and N1 is a positive integer.

Corresponding to the second aspect, it may be understood that the network status information of the N1 terminal devices is used by an application function network element to determine N2 terminal devices participating in training of a federated learning model.

In a possible design, the first request message includes information indicating the candidate range, and the candidate range includes a specified network area or a list of candidate terminal devices.

In a possible design, a value of N1 falls within a specified number range. Optionally, the first request message may include first indication information, and the first indication information indicates that the value of N1 falls within the specified number range.

In a possible design, the first request message includes a value range of N1. Optionally, the value range of N1 may be the same as or different from the specified number range.

In a possible design, the network status information of the N1 terminal devices is greater than or equal to a first network status information threshold.

In a possible design, the communication module is further configured to send network status information of N3 terminal devices, where the candidate range includes the N3 terminal devices, the N3 terminal devices do not include the N2 terminal devices, and N3 is a positive integer.

According to a sixth aspect, an embodiment of this application provides a communication apparatus. The communication apparatus may be used in a network data analytics function network element, and includes:
a communication module, configured to obtain a first request message, where the first request message is used to request network status information of a terminal device in a candidate range, where
the communication module is further configured to obtain the network status information of the terminal device in the candidate range from an access and mobility management function network element and/or an operation, administration, and maintenance network element; and
a processing module, configured to send a first response message by using the communication module, where the first response message includes network status information of N1 terminal devices, the terminal device in the candidate range includes the N1 terminal devices, and N1 is a positive integer.

Corresponding to the third aspect, it may be understood that the network status information of the N1 terminal devices is used by an application function network element to determine N2 terminal devices participating in training of a federated learning model.

In a possible design, the first request message includes information indicating the candidate range, and the candidate range includes a specified network area or a list of candidate terminal devices.

In a possible design, a value of N1 falls within a specified number range. Optionally, the first request message may include first indication information, and the first indication information indicates that the value of N1 falls within the specified number range.

In a possible design, the first request message includes a value range of N1. Optionally, the value range of N1 may be the same as or different from the specified number range.

In a possible design, the network status information of the N1 terminal devices is greater than or equal to a first network status information threshold.

In a possible design, the communication module is further configured to: receive second indication information from the application function network element, where the second indication information indicates to monitor network status information of the N2 terminal devices, the second indication information includes a second network status information threshold, and the second network status information threshold is used to determine whether service traffic information of the terminal device is abnormal; and send, to the application function network element, information about a terminal device whose network status information is abnormal in the N2 terminal devices.

According to a seventh aspect, an embodiment of this application provides a communication method, including:
An application function network element sends a second request message, where the second request message is used to request a recommended terminal device to participate in training of a federated learning model in a candidate range.

The application function network element obtains a second response message, where the second response message includes N1 recommended terminal devices, the terminal device in the candidate range includes the N1 terminal devices, and N1 is a positive integer.

The application function network element determines N2 terminal devices to participate in the training of the federated learning model based on the second response message, where the N1 terminal devices include the N2 terminal devices, and N2 is a positive integer.

According to an eighth aspect, an embodiment of this application provides a communication method, including:

A network data analytics function network element receives a second request message, where the second request message is used to request a recommended terminal device to participate in training of a federated learning model in a candidate range.

The network data analytics function network element determines the recommended terminal device to participate in the training of the federated learning model in the candidate range.

The network data analytics function network element sends a second response message, where the second response message includes N1 recommended terminal devices, the terminal device in the candidate range includes the N1 terminal devices, and N1 is a positive integer.

In a possible design, that the network data analytics function network element determines the terminal device recommended to participate in the training of the federated learning model in the candidate range includes:

The network data analytics function network element obtains network status information of the terminal device in the candidate range from an access and mobility management function network element and/or an operation, administration, and maintenance network element.

The network data analytics function network element determines the N1 recommended terminal devices based on the network status information of the terminal device in the candidate range.

According to a ninth aspect, an embodiment of this application provides a communication apparatus. The communication apparatus may be used in an application function network element, and includes:
a communication module, configured to send a second request message, where the second request message is used to request a recommended terminal device to participate in training of a federated learning model in a candidate range, where
the communication module is configured to obtain a second response message, where the second response message includes N1 recommended terminal devices, the terminal device in the candidate range includes the N1 terminal devices, and N1 is a positive integer; and
a processing module, configured to determine N2 terminal devices to participate in the training of the federated learning model based on the second response message, where the N1 terminal devices include the N2 terminal devices, and N2 is a positive integer.

According to a tenth aspect, an embodiment of this application provides a communication apparatus. The communication apparatus may be used in a network data analytics function network element, and includes:
a communication module, configured to receive a second request message, where the second request message is used to request a recommended terminal device to participate in training of a federated learning model in a candidate range; and
a processing module, configured to determine the recommended terminal device to participate in the training of the federated learning model in the candidate range, where
the communication module is configured to send a second response message, where the second response message includes N1 recommended terminal devices, the terminal device in the candidate range includes the N1 terminal devices, and N1 is a positive integer.

In a possible design, the processing module is specifically configured to: obtain network status information of the terminal device in the candidate range from an access and mobility management function network element and/or an operation, administration, and maintenance network element by using the communication module; and determine the N1 recommended terminal devices based on the network status information of the terminal device in the candidate range.

According to an eleventh aspect, an embodiment of this application provides a communication apparatus. The communication apparatus includes a processor, configured to implement the method described in the first aspect. The processor is coupled to a memory, the memory is configured to store instructions and data, and when executing the instructions stored in the memory, the processor may implement the method described in the first aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

In a possible design, the communication apparatus includes:
a memory, configured to store a program or the instructions; and
a processor, configured to: send a first request message through the communication interface, where the first request message is used to request network status information of a terminal device in a candidate range; and obtain a first response message, where the first response message includes network status information of N1 terminal devices, the terminal device in the candidate range includes the N1 terminal devices, and N1 is a positive integer, where
the processor is further configured to determine N2 terminal devices based on the network status information of the N1 terminal devices, where the N2 terminal devices are configured to participate in training of a federated learning model, the N1 terminal devices include the N2 terminal devices, and N2 is a positive integer.

According to a twelfth aspect, an embodiment of this application provides a communication apparatus. The communication apparatus includes a processor, configured to implement the method described in the second aspect. The processor is coupled to a memory, the memory is configured to store instructions and data, and when executing the instructions stored in the memory, the processor may implement the method described in the second aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

In a possible design, the communication apparatus includes:
a memory, configured to store a program or the instructions; and
a processor, configured to: obtain a first request message through the communication interface, where the first request message is used to request network status information of a terminal device in a candidate range; determine the network status information of the terminal device in the candidate range; and send a first response message through the communication interface, where the first response message includes network status information of N1 terminal devices, the terminal device in the candidate range includes the N1 terminal devices, and N1 is a positive integer.

According to a thirteenth aspect, an embodiment of this application provides a communication apparatus. The communication apparatus includes a processor, configured to implement the method described in the third aspect. The processor is coupled to a memory, the memory is configured to store instructions and data, and when executing the instructions stored in the memory, the processor may implement the method described in the third aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

In a possible design, the communication apparatus includes:
a memory, configured to store a program or the instructions; and
a processor, configured to: obtain a first request message through the communication interface, where the first request message is used to request network status information of a terminal device in a candidate range; obtain the network status information of the terminal device in the candidate range from an access and mobility management function network element and/or an operation, administration, and maintenance network element through the communication interface; and send a first response message through the communication interface, where the first response message includes network status information of N1 terminal devices, the terminal device in the candidate range includes the N1 terminal devices, and N1 is a positive integer.

According to a fourteenth aspect, an embodiment of this application provides a communication apparatus. The communication apparatus includes a processor, configured to implement the method described in the seventh aspect. The processor is coupled to a memory, the memory is configured to store instructions and data, and when executing the instructions stored in the memory, the processor may implement the method described in the seventh aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

In a possible design, the communication apparatus includes:
a memory, configured to store a program or the instructions; and
a processor, configured to: send a second request message through the communication interface, where the second request message is used to request a recommended terminal device to participate in training of a federated learning model in a candidate range; and obtain a second response message through the communication interface, where the second response message includes N1 recommended terminal devices, the terminal device in the candidate range includes the N1 terminal devices, and N1 is a positive integer, where
the processor is further configured to determine N2 terminal devices to participate in the training of the federated learning model based on the second response message, where the N1 terminal devices include the N2 terminal devices, and N2 is a positive integer.

According to a fifteenth aspect, an embodiment of this application provides a communication apparatus. The communication apparatus includes a processor, configured to implement the method described in the eighth aspect. The processor is coupled to a memory, the memory is configured to store instructions and data, and when executing the instructions stored in the memory, the processor may implement the method described in the eighth aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

In a possible design, the communication apparatus includes:
a memory, configured to store a program or the instructions; and
a processor, configured to: obtain a second request message through the communication interface, where the second request message is used to request a recommended terminal device to participate in training of a federated learning model in a candidate range; determine the recommended terminal device to participate in the training of the federated learning model in the candidate range; and send a second response message through the communication interface, where the second response message includes N1 recommended terminal devices, the terminal device in the candidate range includes the N1 terminal devices, and N1 is a positive integer.

According to a sixteenth aspect, an embodiment of this application provides a communication system, including: the communication apparatus according to the fourth aspect or the eleventh aspect, and the communication apparatus according to the fifth aspect or the twelfth aspect;
the communication apparatus according to the fourth aspect or the eleventh aspect, and the communication apparatus according to the sixth aspect or the thirteenth aspect; or
the communication apparatus according to the fourth aspect or the eleventh aspect, the communication apparatus according to the fifth aspect or the twelfth aspect, and the communication apparatus according to the sixth aspect or the thirteenth aspect.

According to a seventeenth aspect, an embodiment of this application provides a communication system, including the communication apparatus according to the ninth aspect or the fourteenth aspect, and the communication apparatus according to the tenth aspect or the fifteenth aspect.

According to an eighteenth aspect, an embodiment of this application provides a communication system. The communication system includes an application function network element, and the application function network element is configured to perform any one of the first aspect and the possible design solutions of the first aspect. The communication system may further include one or more of a network data analytics function network element, an access and mobility management function network element, and an operation, administration, and maintenance network element. The network data analytics function network element may communicate with the application function network element, the access and mobility management function network element, or the operation, administration, and maintenance network element, and the access and mobility management function network element or the operation, administration, and maintenance network element may communicate with the application function network element or the network data analytics function network element.

According to a nineteenth aspect, an embodiment of this application further provides a computer program. When the computer program is run on a computer, the computer is enabled to perform the method provided in any one of the first aspect to the third aspect, the seventh aspect, and the eighth aspect.

According to a twentieth aspect, an embodiment of this application further provides a computer program product, including instructions. When the instructions are run on a computer, the computer is enabled to perform the method provided in any one of the first aspect to the third aspect, the seventh aspect, and the eighth aspect.

According to a twenty-first aspect, an embodiment of this application further provides a computer-readable storage medium. The computer-readable storage medium stores a computer program or instructions, and when the computer program or the instructions are run on a computer, the computer is enabled to perform the method provided in any one of the first aspect to the third aspect, the seventh aspect, and the eighth aspect.

According to a twenty-second aspect, an embodiment of this application further provides a chip. The chip is configured to read a computer program stored in a memory, to perform the method provided in any one of the first aspect to the third aspect, the seventh aspect, and the eighth aspect.

According to a twenty-third aspect, an embodiment of this application further provides a chip system. The chip system includes a processor, configured to support a computer apparatus in implementing the method provided in any one of the first aspect to the third aspect, the seventh aspect, and the eighth aspect. In a possible design, the chip system further includes a memory, and the memory is configured to store a program and data that are necessary for the computer apparatus. The chip system may include a chip, or may include the chip and another discrete component.

### BRIEF DESCRIPTION OF DRAWINGS

FIG. 1 is a diagram of a 5G network architecture;
FIG. 2 is a diagram of data distribution of horizontal federated learning;
FIG. 3 is a diagram of training of a horizontal federated learning model;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

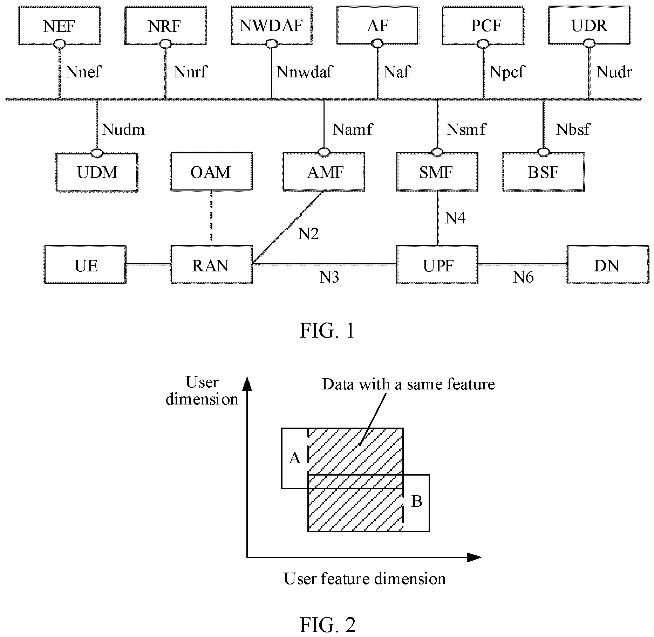

FIG. 1 is a diagram of a 5G network architecture to which an embodiment of this application is applicable. The 5G network architecture shown in FIG. 1 includes three parts: a terminal device, a data network (data network, DN), and an operator network. The following briefly describes functions of a part of network elements in the 5G network architecture.

The operator network may include one or more of the following network elements: an authentication server function (Authentication Server Function, AUSF) network element, a network exposure function (network exposure function, NEF) network element, a policy control function (Policy Control Function, PCF) network element, a unified data management (unified data management, UDM), a unified data repository (Unified Data Repository, UDR), a network repository function (Network Repository Function, NRF) network element, an access and mobility management function (Access and Mobility Management Function, AMF) network element, a session management function (session management function, SMF) network element, a radio access network (Radio Access Network, RAN) device, a user plane function (user plane function, UPF) network element, a network data analytics function (Network Data Analytics Function, NWDAF) network element, and the like. In the operator network, the parts other than the radio access network may be referred to as a core network. In a possible implementation method, the operator network further includes an application function (Application Function, AF) network element and an operation, administration, and maintenance (operation, administration, and maintenance, OAM) network element.

During specific implementation, the terminal device in embodiments of this application may be a device configured to implement a wireless communication function. Some examples of the terminal device include: a user equipment (user equipment, UE), an access terminal, a terminal unit, a terminal station, a mobile station, a remote station, a remote terminal, a mobile device, a wireless communication device, a terminal agent, a terminal apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehiclemounted device, or a wearable device. The terminal device may be a terminal device in the internet of things, a virtual reality (virtual reality, VR) terminal device, a terminal device in a 5G network or a future evolved public land mobile network (public land mobile network, PLMN), an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a household appliance, or the like. The terminal may be mobile or fixed.

The terminal device may establish a connection to the operator network through an interface (for example, N1) provided by the operator network, and use a service such as data and/or a voice provided by the operator network. The terminal device may further access the DN by using the operator network, and use an operator service deployed on the DN and/or a service provided by a third party. The third party may be a service party other than the operator network and the terminal device, and may provide another service such as data and/or a voice for the terminal device. A specific representation form of the third party may be specifically determined based on an actual application scenario, and is not limited herein.

As an access network element, the RAN is a subnet of the operator network, and is an implementation system between a service node in the operator network and the terminal device. To access the operator network, the terminal device first accesses the RAN, and then may be connected to the service node in the operator network via the RAN. The RAN device in this application is a device that provides a wireless communication function for the terminal device, for example, provides a connection between the terminal device and the core network. The RAN device is also referred to as an access network device. The RAN device in this application includes but is not limited to: a base station (base station), an evolved NodeB (evolved NodeB, eNodeB), a transmission reception point (transmission reception point, TRP), a next generation NodeB (g NodeB, gNB) in 5G, a next generation base station in a 6G mobile communication system, a base station in a future mobile communication system or an access node in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), and a base transceiver station (base transceiver station, BTS), a home base station (for example, a home evolved NodeB, or a home NodeB, HNB), a baseband unit (baseband unit, BBU), a transmitting point (transmitting point, TP), a mobile switching center, and the like.

The OAM network element mainly performs functions such as routine analysis, prediction, planning, and configuration of a network and a service, and test and fault management of the network and the service thereof. The OAM network element may also be referred to as a network management system. For example, the OAM may interact with the RAN to obtain information such as a radio channel condition and radio resource utilization on a RAN side.

The AMF network element mainly provides functions such as mobility management, lawful monitoring, or access authentication/authorization for the terminal device. In addition, the AMF network element is further responsible for transferring a user policy between a UE and the PCF.

The SMF network element mainly performs functions such as session management, execution of a PCF-delivered control policy, UPF selection, and UE internet protocol (Internet Protocol, IP) address assignment.

The UPF network element, serving as an interface UPF with the data network, completes functions such as user plane data forwarding, charging statistics at a session/flow level, and bandwidth limiting.

The UDM network element is mainly responsible for functions such as subscription data management and user access authorization.

The UDR is mainly responsible for a function of storing and accessing type data such as subscription data, policy data, and application data.

The NEF network element is mainly used for capability supporting and event exposure.

The AF network element mainly transfers a requirement of an application side on a network side, for example, a quality of service (Quality of Service, QoS) requirement or user status event subscription. The AF may be a third-party function entity, or may be an application service deployed by an operator.

The NEF network element is mainly responsible for externally providing exposure of a capability and an event of a 5G network, and receiving related external information.

The PCF network element is mainly responsible for policy control functions such as charging for a session and a service flow level, QoS bandwidth guarantee and mobility management, and UE policy decision.

The NRF network element may be configured to provide a network element discovery function, and provide, based on a request of another network element, network element information corresponding to a network element type. The NRF further provides network element management services such as network element registration, update, and deregistration, and network element status subscription and push.

The NWDAF network element is mainly configured to collect network data, for example, collect related data from the terminal device, the RAN device, the core network, a third-party service server, or the network management system. The NWDAF network element provides a network data analytics service, can output a data analytics result, and provides the data analytics result for the terminal device, the RAN device, the core network, the third-party service server, or the network management system. The NWDAF may perform data analytics by using a machine learning model. For example, a function of the NWDAF in 3GPP Release 17 is decomposed, including a data collection function (or a data collection logical function (data collection function)), a model training function (or a machine learning model training logical function (machine learning model training logical function)), and a model inference function (or an analytics logical function (analytics logical function)). For example, the data analytics result may be used to assist the network in selecting a quality of service parameter of a service, assist the network in performing traffic routing, assist the network in selecting a background traffic transmission policy, or the like.

In FIG. 1, Nnwdaf, Nausf, Nnef, Npcf, Nudm, Naf, Namf, Nsmf, N1, N2, N3, N4, and N6 are interface sequence numbers. For meanings of these interface sequence numbers, refer to meanings defined in the 3GPP standard protocol. This is not limited herein.

It should be noted that in embodiments of this application, the network data analytics function network element may be the NWDAF network element shown in FIG. 1, or may be another network element that has a function of the NWDAF network element in this application in a future communication system. The mobility management network element may be the AMF network element shown in FIG. 1, or may be another network element that has a function of the AMF network element in this application in the future communication system. The user plane network element may be the UPF network element shown in FIG. 1, or may be another network element that has a function of the UPF network element in this application in the future communication system. The session management function network element may be the SMF network element shown in FIG. 1, or may be another network element that has a function of the SMF network element in this application in the future communication system. The application function network element may be the AF network element shown in FIG. 1, or may be another network element that has a function of the AF network element in this application in the future communication system. The access network device may be the RAN device shown in FIG. 1, or may be another network element that has a function of the RAN device in this application in the future communication system. The operation, administration, and maintenance network element may be the OAM network element shown in FIG. 1, or may be another network element that has a function of the OAM network element in this application in the future communication system.

For ease of description, in embodiments of this application, an example in which the data analytics network element is the NWDAF network element, the mobility management network element is the AMF network element, the user plane network element is the UPF network element, the application function network element is the AF network element, the operation, administration, and maintenance network element is the OAM network element, and the access network device is the RAN device is used for description. In addition, an example in which the terminal device is the UE is used for description. In addition, in embodiments of this application, the NWDAF network element may also be referred to as an NWDAF for short, the UPF network element may also be referred to as a UPF for short, the AF network element may also be referred to as an AF for short, and the OAM network element may also be referred to as an OAM for short.

To facilitate understanding of the solutions in embodiments of this application, the following first describes technologies related to embodiments of this application.

Federated learning (Federated Learning, FL) is a machine learning framework. In the framework, nodes do not need to exchange data, but transfer an intermediate result obtained during training, for example, information that can represent a model, such as a parameter or a gradient of the model. In other words, the federated learning can be used to perform modeling of machine learning, in other words, training of an AI model, while meeting requirements on user privacy protection and data security. The federated learning, as a paradigm of distributed machine learning, can effectively resolve the problem of data silos. The nodes participating in the federated learning can perform joint modeling without sharing data, to break the data silos and implement AI collaboration.

Generally, based on different distribution of data sources of participants, the federated learning may be classified into three types: horizontal federated learning, vertical federated learning, and federated transfer learning. The horizontal federated learning means that, when user features of a plurality of data sets (or understood as sample sets) overlap a lot but users overlap a little, the data sets are split horizontally (in other words, in a user dimension), and a model is trained based on a part of data whose user features are the same and whose users are not completely the same. The vertical federated learning means that, when users of a plurality of data sets overlap a lot but user features overlap a little, the data sets are split vertically (in other words, in a feature dimension), and a model is trained based on a part of data whose users are the same and whose user features are not completely the same. The federated transfer learning means that, when users and user features of a plurality of data sets all overlap a little, data is not split, and transfer learning is used to overcome a case in which data or sample labels are insufficient.

The following uses the horizontal federated learning as an example to describe in detail a process of training a federated learning model.

FIG. 2 is a diagram of data distribution of horizontal federated learning, and data involves data sets of operators A and B are involved. The operators A and B have a small intersection set in a user dimension, but a large intersection set in a user feature dimension. During training of a horizontal federated learning model, data with a same feature may be selected from the data sets of the operators A and B as training data. For example, the data set of the operator A includes data of a user 1, a user 2, a user 3, and a user 4, data of each user includes features: a feature 1, a feature 2, a feature 3, a feature 4, and a feature 5. The data set of the operator B includes data of the user 4, a user 5, a user 6, a user 7, and a user 8, and data of each user includes features: the feature 2, the feature 3, the feature 4, the feature 5, and a feature 6. During the training of the horizontal federated learning model, data with the feature 2, the feature 3, the feature 4, and the feature 5 may be selected from the data sets of the operators A and B as the training data.

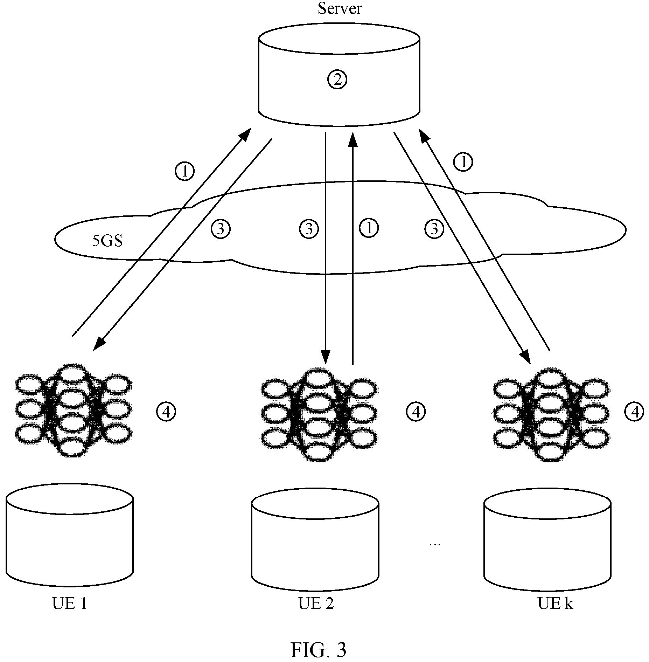

FIG. 3 is a diagram of training of a horizontal federated learning model. Step 1: A plurality of UEs participate in the training of the federated learning model, calculate, by using local data, gradients corresponding to local models, and report the gradients to a server (server) used for training the federated learning model. FIG. 3 shows a process of training the horizontal federated learning model in which intermediate result transmission is performed by using a 5G system (5G System, 5GS). In step 1, k UEs may report gradients to the server by using the 5GS. Step 2: The server performs gradient aggregation, to determine or update a parameter of the federated learning model. Step 3: The server distributes a gradient corresponding to an updated federated learning model to each participant. For example, the server sends the gradient corresponding to the updated federated learning model to each UE by using the 5GS. Step 4: Each UE updates a local model of the UE based on the gradient that corresponds to the federated learning model and that is obtained in step 3. Step 1 to step 4 are repeated and iterated for a plurality of rounds until the federated learning model converges.

In some scenarios such as massive internet of things (massive internet of things, mIoT), a huge number of UEs may participatein training of the federated learning model, and excessively large network bandwidth is occupied if all UEs participate in the training of the federated learning model. Because network bandwidth resources are limited, when a total number of participants of the training of the horizontal federated learning model is large, a part of the UEs may be selected to participate in model training in each round of training or updating a federated learning model. A UE selection result directly affects training efficiency of the model.

In a federated learning FL environment, there may be heterogeneous clients. For example, different UEs have different data sets with different advantages and disadvantages, and storage, computing, and communication capabilities of different UEs may also differ greatly. Randomly selecting a part of the UEs may increase heterogeneity in the federated learning FL environment. This deteriorates training efficiency of the federated learning model. For example, the heterogeneity in the FL environment mainly includes: (1) heterogeneity of data, where local data in UE devices may not be independent and identically distributed (independent identically distributed); (2) heterogeneity of storage and computing capabilities, where UEs may differ greatly in storage and computing capabilities, and consequently, when different UEs calculate model gradients by using the local data, time for calculation differ greatly; and (3) heterogeneity of communication capabilities, where communication capabilities of different UEs may also differ greatly, and consequently, time for different UEs to upload the locally calculated gradients to the server differs greatly. For different UEs, time for completing local calculation may differ, and time for transmitting intermediate results to the server may also differ. In addition, the server can update the federated learning model only after all the UEs complete transmission of the intermediate results. Therefore, an overall training periodicity is prolonged. It can be learned that the heterogeneity caused by random UE selection affects the training efficiency of the federated learning model.

In a conventional technology, a non-random client (or UE) selection solution is used. A server such as an AF network element selects, based on application layer information of UEs, distribution information of data sets of the users, amounts of transmission information of the users, and the like, a UE participating in training of a federated learning model. Specifically, during each round of training, the AF network element may select a UE with a large amount of transmission information to participate in the training of the federated learning model. Alternatively, the AF network element selects, by using an experience-driven federated learning framework of reinforcement learning, a UE participating in each round of training, to offset a deviation between different UEs introduced by data that is not independent and identically distributed. Alternatively, the AF network element preferentially selects, through reinforcement learning modeling, a UE whose data has a significant effect on improving model accuracy and that has a capability of quick training. However, in this design, only the application layer information of the UE is considered. If a case occurs, for example, the UE moves out of a service area, a radio signal of the UE becomes weak, or a connection between the UE and a network is interrupted, and the case causes an error in training and an update of the federated learning model, efficiency of federated learning is still affected.

Based on this, embodiments of this application provide a solution for selecting a participant of federated learning. In embodiments of this application, network status information of UEs is open, so that when selecting a UE participating in training or an update of a federated learning model, the AF considers network status information of the UE in a timely manner, to avoid selecting a UE with poor network status or a UE that is not suitable for the federated learning, so as to improve efficiency of the federated learning.

In embodiments of this application, the network status information of the UE indicates one or more of the following parameters: a connection state of the UE, where for example, the connection state of the UE is a connected state, an idle state, or a deactivated state; reachability of the UE, where for example, the UE is reachable or unreachable; mobility of the UE, for example, a mobility mode or a mobility trend of the UE; a radio channel condition of the UE, or described as a status of a radio channel between the UE and a RAN device, where for example, a signal to interference plus noise ratio (signal to interference plus noise ratio, SINK) of the radio channel between the UE and the RAN device, a reference signal received power (reference signal received power, RSRP) of receiving a reference signal by the UE, or reference signal received quality (reference signal received quality, RSRQ) represents the radio channel condition; and radio resource utilization corresponding to the UE, or described as radio resource utilization of a RAN side accessed by the UE.

The following describes in detail, according to solution 1 to solution 3, the technical solution of determining, with reference to the network status information of the UE, the UE participating in the federated learning in embodiments of this application.

### Solution 1

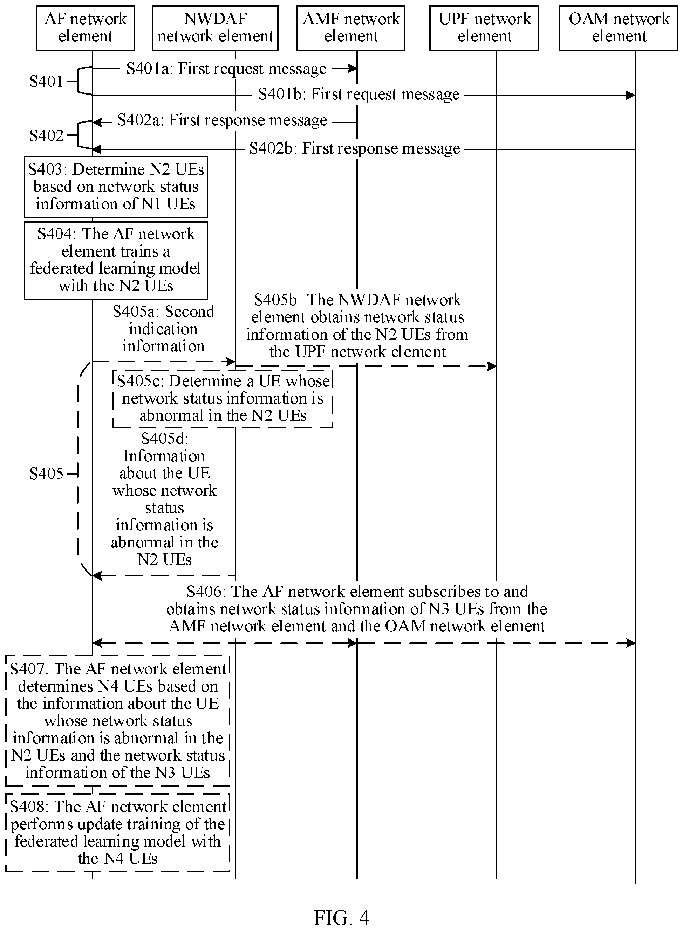

FIG. 4 shows a communication method. The method includes the following procedures.

S401: An AF network element sends a first request message, where the first request message is used to request network status information of a UE in a candidate range.

Specifically, the candidate range may be a specified network area or a list of candidate terminal devices.

Some examples of the specified network area are as follows. For example, the specified network area may be one or more network slices, and one network slice is identified by single network slice selection assistance information (single network slice selection assistance, S-NSSAI). For example, the specified network area may be one or more tracking areas, and one tracking area (tracking area, TA) corresponds to one tracking area identity (tracking area identity, TAI). For example, the specified network area may be one or more cells (cells), and one cell corresponds to one cell identity (cell identity, cell ID). For example, the specified network area may correspond to one or more data networks, one data network is identified by a data network name (data network name, DNN), and a UE in the specified network area is a UE accessing the data network. For example, the specified network area may correspond to one or more applications, one application corresponds to one application identity (application identity, application ID), and a UE in the specified network area is a UE that is running one or more applications identified by application IDs.

It may be understood that, in an actual communication environment, the UE may move, and UEs in the specified network area may be different in different time periods. In addition, the specified network area may alternatively be a combination of the foregoing identifiers. For example, a UE in the specified network area may be a UE that is in an area identified by a TA 1 and that is in a slice identified by S-NSSAI 1. For example, a UE in the specified network area may be a UE that is in a cell identified by a cell 2 and that accesses a data network identified by a DNN 3.

The list of candidate terminal devices may be understood as a preconfigured group of UEs, and corresponds to a group of UE identifiers (UE group IDs, or referred to as a list of UE IDs). For example, an internet protocol (internet protocol, IP) address list of the UE is represented as a list of UE IPs, or a subscription permanent identifier (subscription permanent identifier, SUPI) list is represented as a list of SUPIs, or a generic public subscription identifier (generic public subscription identifier, GPSI) list is represented as a list of GPSIs.

Specifically, the AF network element may send, based on network status information that the AF network element expects to obtain, the first request message to a network element that can provide the network status information of the UE. For example, if an AMF network element can provide the network status information that the AF network element expects to obtain, the AF network element may send the first request message to the AMF network element; or if an OAM network element can provide the network status information that the AMF network element expects to obtain, the AF network element may send the first request message to the OAM network element. For example, for a UE, the network status information that the AF expects to obtain is from the AMF and the OAM. FIG. 4 specifically shows the following steps in S401. S401a: The AF network element sends the first request message to the AMF. S401b: The AF network element sends the first request message to the OAM.

Specifically, the first request message may be a subscription message. For example, the AF may send the subscription message to the AMF by using an Namf_EventExposure Subscribe service operation, to obtain the network status information of the UE in the candidate range, such as a connection state of the UE, reachability information of the UE, and mobility information of the UE. The subscription message may carry the following information: an event identifier (Event ID) and information indicating the candidate range. Event ID identifies a type of a subscribed event, and represents (a specific type of) the network status information that is of the UE and that the AF expects to subscribe to and obtain from the AMF. For example, Event ID=UE reachability represents that the network status information that is of the UE and that the AF subscribes to from the AMF includes the reachability information of the UE. For example, Event ID=Location Reporting represents that the network status information that is of the UE and that the AF subscribes to from the AMF includes location change information of the UE. The information indicating the candidate range may be an identifier of the candidate range. For example, a range of UEs represents the specified network area, and a list of UE IDs represents the list of candidate terminal devices.

Optionally, the AF network element may determine a number of terminal devices whose network status information is requested. For example, the first request message may specifically request network status information of a part or all of UEs in the candidate range. In an optional implementation, the AF may include first indication information in the first request message, where the first indication information indicates that a number of UEs that corresponds to network status information and that is fed back by the AMF/OAM needs to fall within a specified number range. N1 represents the number of UEs that corresponds to the network status information and that is fed back by the AMF/OAM, where a value of N1 falls within the specified number range. For example, the specified number range may be a number threshold, for example, 1000, representing that N1≤1000, where N1 is a positive integer. Alternatively, the specified number range may be a value interval, for example, [200, 3000], where N1 is a positive integer in [200, 3000]. Alternatively, in an optional implementation, the AF may indicate, to the AMF/OAM, a range of UE number corresponding to the network status information needed by the AF. For example, the AF includes the range of UE number (range of UE number), namely, a value range of N1, in the first request message. Optionally, the value range of N1 described herein may be the same as or different from the specified number range. Alternatively, if the first request message does not include first indication information and a value range of N1, it represents that the AF expects to obtain the network status information of all the UEs in the candidate range, or represents that the AF does not limit a number of UEs whose network status information is to be obtained. Further, if the candidate range is the list of candidate terminal devices, the AF may request network status information of all UEs in the list of candidate terminal devices.

Optionally, the AF network element may determine to request network status information of UE within a valid time range. For example, the AF may include a data validity indication in the first request message. The data validity indication indicates a valid time range that corresponds to valid data and that the AF expects to obtain, and the first request message including the data validity indication is specifically used to request the network status information of the UE in the candidate range within the valid time range. For example, the valid time range may be a time range, indicating that network status information obtained by a data providing network element (AMF/OAM) within the time range is valid data. For example, if the time range is from 11:00 to 12:00 on a current day, data collected before 11:00 or after 12:00 on the current day is invalid. Alternatively, the valid time range may be a deadline point, indicating that only data fed back by a data providing network element (AMF/OAM) before the deadline point is valid.

Optionally, the AF network element may alternatively include a joint validity indication in the first request message. For example, the joint validity indication indicates that only data collected by a data providing network element within a specific time range and sent to a data obtaining network element before a deadline point is valid data.

Optionally, the AF network element may alternatively include, in the first request message, performance indication information representing that the AF network element has a requirement on performance of the UE whose network status information is requested. For example, the performance indication information indicates that the network status information that is of the UE and that the AF network element expects to request is greater than or equal to a first network status information threshold. The first network status information threshold may be predefined or determined by the AF. This is not limited in this embodiment of this application. Optionally, the first request message may include the first network status information threshold.

In addition, when the AF is a third-party application function, for security purposes, interaction between the AF and the AMF needs to be performed via an NEF. The NEF controls a mapping relationship between an AF identifier and Event ID that is allowed to be obtained, and a related inbound limit (namely, a limit of Event ID that can be requested by the AF) and outbound limit (namely, a limit of Event ID that the AF can be notified of). For example, when the third-party AF needs to subscribe to the network status information from the AMF, the third-party AF needs to first send a subscription message to the NEF, and then the NEF sends the subscription message to the AMF. Subsequently, the AMF first sends network status information of a related UE to the NEF, and then the NEF sends the network status information to the third-party AF.

Similarly, the AF may send a subscription message to the OAM to obtain network status information of a related UE, such as a radio channel condition and radio resource utilization. It should be noted that the AF may directly obtain data from the OAM. The AF may alternatively obtain data from the OAM via an NWDAF or another 5GC NF. For example, the AF first sends a subscription message to the NWDAF to subscribe to RAN-side data at the OAM, then the NWDAF subscribes to and obtains the related data from the OAM, and finally the NWDAF notifies the AF of the obtained data through a service-based interface (for example, an Nnwdaf_AnalyticsSubscription_Notify service operation).

S402: The AF network element obtains a first response message, where the first response message includes network status information of N1 UEs.

The N1 UEs are included in the candidate range, or in other words, the UE in the candidate range includes the N1 UEs, and the N1 UEs represent the part or all of the UEs in the candidate range. Specifically, for a definition of the N1 UEs, refer to the descriptions in S401. For example, when the first request message sent by the corresponding AF network element includes the first indication information, the value of N1 falls within the specified number range. For example, when the first request message sent by the corresponding AF network element indicates the number range, the value of N1 falls within the number range indicated by the AF. For example, when the first request message sent by the AF does not carry the first indication information and the indicated number range, the N1 UEs include all UEs in the candidate range whose network status information can be collected by a data provider. For another example, when the first request message sent by the AF carries the performance indication information and/or the first network status information threshold, the network status information of the N1 UEs is greater than or equal to the first network status information threshold. Specifically, corresponding to the descriptions in S401, the first response message may be from the AMF and/or the OAM. For example, FIG. 4 shows the following steps in S402. S402a: The AMF network element sends the first response message to the AF network element. S402b: The OAM network element sends the first response message to the AF network element. In an example, FIG. 4 shows only a solution that the AMF/OAM directly sends the first response message to the AF network element. For a solution in which the AMF/OAM indirectly sends the first response message to the AF network element via an intermediate network element (such as the NEF or the NWDAF), refer to the descriptions of S401. Details are not described in this embodiment of this application again.

Specifically, corresponding to Event ID carried in the first request message in S401, the AMF network element/OAM network element may include Event ID in the sent first response message, to indicate the type of the network status information of the UE in the first response message. The network status information included by the AMF network element/OAM network element in the first response message is a value of a type of network status information corresponding to Event ID, or may be described as original network status information that is of the N1 UEs and that is obtained by the AMF network element/OAM network element. For example, when the type of the network status information includes radio resource utilization, radio resource utilization corresponding to the UE carried in the first response message may be a specific value such as 0.6.

S403: The AF network element determines N2 UEs based on the network status information of the N1 UEs.

The N2 UEs are configured to participate in training of a federated learning model, and the N2 UEs are included in the N1 UEs, or in other words, the N1 UEs include the N2 UEs, where N2 is a positive integer, and N2 is less than or equal to N1.

Specifically, the AF network element may determine the N2 UEs based only on the network status information of the N1 UEs through data analytics or by using a specific algorithm. Alternatively, the AF network element may determine the N2 UEs based on the network status information of the N1 UEs and application layer information of the N1 UEs. For example, an existing application layer algorithm is optimized by using the network status information of the UEs. Alternatively, a new algorithm is designed with reference to the network status information and the application layer information of the UEs, and the N2 UEs are determined by using the new algorithm.

For example, the AF network element may determine the N2 UEs based on the network status information of the N1 UEs and the application layer information of the N1 UEs. This embodiment of this application provides a specific implementation of determining the N2 UEs.

It is assumed that N1 is 100 and N2 is 80. To be specific, the AF network element obtains application layer information and network status information of 100 UEs, and prepares to select 80 UEs from the 100 UEs to participate in the training of the federated learning model. First, the AF network element may score each UE based on application layer information of the UE and a specified application layer algorithm, to obtain application layer scores corresponding to the 100 UEs. The scores are UE1_app=0.7, UE2_app=0.5, UE3_app=0.9, ..., and UE100_app=0.75. The AF may score each UE based on a connection state of the UE. For example, "1" represents a connected state, and "0" represents an idle state. Connection state scores corresponding to the 100 UEs are obtained. The scores are UE1_CMstate=1, UE2_CMstate=0, UE3_CMstate=0, ..., and UE100_CMstate=1. The AF scores each UE based on reachability information of the UE. For example, "1" represents that the UE is reachable, and "0" represents that the UE is unreachable. It may be understood that a UE in the idle state may be reachable. Reachability scores corresponding to the 100 UEs are obtained. The scores are, for example, UE1_reachable=1, UE2_reachable=1, UE3_reachable=0, ..., and UE100_reachable=1. The AF scores each UE based on mobility information of the UE. For example, the AF calculates a mobility score of the UE based on a location and a moving speed of the UE, to obtain mobility scores corresponding to the 100 UEs. The scores are UE1_mobility=0.65, UE2_mobility=0.7, UE3_mobility=0.3, ..., and UE100_mobility=0.95. The AF scores each UE based on a radio channel condition of the UE, to obtain radio channel condition scores corresponding to the 100 UEs. The scores are UE1_radiochannel=0.85, UE2_radiochannel=0.5, UE3_radiochannel=0.6, ..., and UE100_radiochannel=0.7. The AF scores each UE based on radio resource utilization of the UE, to obtain radio resource utilization scores corresponding to the 100 UEs. The scores are UE1_radioresource=0.8, UE2_radioresource=0.4, UE3_radioresource=0.7, ..., and UE100_radioresource=0.55.

It may be understood that a scoring value of each parameter may alternatively be set based on an actual situation. For example, for scoring the connection state of the UE, in addition to that "1" represents the connected state and "0" represents the idle state, the connected state may alternatively be represented by "0.9", and the idle state may alternatively be represented by "0.1". This is not limited in this embodiment of this application.

Second, the AF sets a weight for each parameter based on an importance degree of each parameter indicated by the network status information. For example, a weight of the application layer information is set to UE_app_weight=0.3, a weight of the connection state is set to UE_CMstate_weight=0.2, a weight of the reachability is set to UE_reachable_weight=0.1, a weight of the mobility is set to UE_mobility_weight=0.2, a weight of the radio channel condition is set to UE_radiochannel_weight=0.1, and a weight of the radio resource utilization is set to UE_radioresource_weight=0.1.

Finally, the AF may calculate a weighted score of each UE based on the scores and the weights, for example, UE1_score=0.7*0.3+1*0.2+1*0.1+0.65*0.2+0.85*0.1+0.8*0.1=0.805. Similarly, the AF may calculate weighted scores of the other UEs, then sort the weighted scores of all the UEs, and select 80 UEs with higher scores from the UEs as UEs participating in the training of the federated learning model.

S404: The AF network element trains the federated learning model with the N2 UEs.

Specifically, refer to step 1 to step 4 described in a related technology for implementation. Details are not described in this embodiment of this application again.

In an optional implementation, for a plurality of rounds of training of the federated learning model, N2 UEs participating in each round of model training may be determined based on S401 to S404 in each round, or N2 UEs participating in each round of model training may be determined based on S401 to S404 every specific round. For example, it is assumed that a convergence condition is met after I rounds of training are performed on the federated learning model, and the AF may determine, based on S401 to S403, a UE participating in an i^{th} round of the I rounds of model training, i is any positive integer from 1 to I. Alternatively, i includes a part of positive integers from 1 to I. For example, a difference between every two adjacent values of i is the same. For example, I is 6, and a value of i is 1, 3, or 5. It may be understood that, when I is 6, and the value of i is 1, 3, or 5, it represents that a UE participating in a 2^{nd} round of model training is consistent with that in a 1^{st} round, a UE participating in a 4^{th} round of model training is consistent with that in a 3^{rd} round, and a UE participating in a 6^{th} round of model training is consistent with that in a 5^{th} round. For another example, a difference between every two adjacent values of i is not limited to a same value, and a value of i may be random or determined by using a related algorithm. For example, if I is 6, the value of i may be 1, 3, 4, or 6. It may be understood that, when I is 6, and the value of i is 1, 3, 4, or 6, it represents that a UE participating in a 2^{nd} round of model training is consistent with that in a 1^{st} round, and a UE participating in a 5^{th} round of model training is consistent with that in a 4^{th} round.

In another optional implementation, for a plurality of rounds of training of the federated learning model, in each round starting from a 2^{nd} round, a UE participating in the current round of model training may be updated and determined based on a UE determined to participate in a previous round of model training. For example, a 1^{st} round of model training may be implemented based on S401 to S404, and a subsequent round of model training may be implemented based on S405 to S408. It may be understood that, if S401 to S404 are denoted as a manner of determining the UE participating in an i^{th} round of model training, S405 to S408 shown by dashed lines in FIG. 4 may be understood as a manner of determining a UE participating in an (i+1)^{th} round of model training, where i is a positive integer.

S405: The AF network element obtains information about a UE whose network status information is abnormal in the N2 UEs.

For example, FIG. 4 shows steps: S405a. The AF network element may send second indication information to the NWDAF network element, where the second indication information indicates to monitor network status information of the N2 UEs. S405b. The NWDAF network element obtains the network status information of the N2 UEs from a UPF network element. S405c. The NWDAF network element determines the UE whose network status information is abnormal in the N2 UEs. S405d. The NWDAF network element sends the information about the UE whose network status information is abnormal in the N2 UEs to the AF network element.

Specifically, the information about the UE whose network status information is abnormal may include an abnormality indication and network status abnormality information. The abnormality indication indicates a type of abnormality of the network status information, for example, service traffic abnormality. The network status abnormality information may include service traffic abnormality information, for example, quality of service (quality of service, QoS) information of the UE. The QoS information of the UE may represent abnormality of the UE, for example, an excessively high or low signal transmission delay corresponding to the UE and an excessively high packet loss rate corresponding to the UE. Optionally, the second indication information may include a second network status information threshold, and the second network status information threshold is used to determine whether the network status information of the UE is abnormal.

Specifically, the second indication information in S405a may be implemented by using a subscription request. For example, the AF may send the subscription request to the NWDAF by using an Nnwdaf_AnalyticsSubscription_Subscribe service operation, and the subscription request carries the following parameters:

Analytics identifier (Analytics ID): Identifies an analysis type of subscription. In this embodiment of this application, Analytics ID may be "QoS information of abnormal UEs", representing obtained QoS information of an abnormal UE (for example, a UE with an excessively high or low delay).

Target of analytics reporting (Target of analytics reporting): For example, the NWDAF needs to collect and analyze data of the N2 UEs. Optionally, the NWDAF indicates identifiers of the N2 UEs, and the identifiers of the N2 UEs are denoted as a UE list 2 (UE ID list 2), that is, Target of analytics reporting=UE ID list 2.

Notification indication (Notification Indication): Indicates a condition for the NWDAF to feed back an analysis result. For example, the NWDAF may perform feedback periodically, or perform feedback based on a threshold, for example, perform feedback when a delay variance of the UEs in the UE ID list 2 is greater than a specific threshold. It may be understood that, the notification indication is an option, and the subscription request may include the notification indication or may not include the notification indication.

Information indicating content (Notification Threshold) notified by the NWDAF: The information may correspond to the second network status information threshold. For example, the second network status information threshold corresponds to a specific threshold (for example, 100 ms), and indicates that the NWDAF needs to feed back QoS information of a UE whose delay is greater than the threshold to the AF. Alternatively, the second network status information threshold may correspond to a threshold group range represented by a group of thresholds, for example, greater than 100 ms or less than 10 ms, and indicates that the NWDAF needs to feed back QoS information of a UE whose delay is within the threshold group range to the AF. It may be understood that, the notification threshold is an option, and the subscription request may include the notification threshold or may not include the notification threshold.

In S405b, the NWDAF network element may subscribe to and obtain QoS information of the N2 UEs from the UPF network element by using an Nupf_EventExposure_Subscribe service operation. After completing information collection, the UPF network element notifies the NWDAF network element of the collected QoS information by using an Nupf_EventExposure_Notify service operation. Optionally, the NWDAF network element may alternatively subscribe to and obtain QoS information of the N2 UEs from the UPF network element via an SMF network element.

In S405c, if the subscription request sent by the AF in S405a includes the second network status information threshold (for example, the notification threshold), the NWDAF network element may determine, based on the second network status information threshold, whether the network status information of the N2 UEs is abnormal, to determine the UE whose network status information is abnormal in the N2 UEs. Alternatively, if the subscription request sent by the AF in S405a does not include the second network status information threshold, the NWDAF network element may determine, based on a preconfigured internal algorithm, the UE whose network status information is abnormal in the N2 UEs.

In S405d, the NWDAF network element may send a notification message to the AF by using an Nnwdaf_AnalyticsSubscription_Notify service operation, to feed back the information about the UE whose network status information is abnormal in the N2 UEs. Specifically, corresponding to the parameters carried in the subscription request in S405a, the Nnwdaf_ AnalyticsSubscription_Notify service operation may include the following parameters: Analytics ID, Target of analytics reporting=UE ID list 2, and the QoS information of the abnormal UE (QoS information of abnormal UEs). In addition, optionally, if the subscription request in S405a carries the notification indication, the NWDAF network element may feed back the QoS information of the abnormal UE to the AF network element based on the notification indication. For example, the NWDAF network element determines, based on the notification indication, to perform feedback periodically, or may determine, based on the notification indication, to perform feedback based on the threshold. Alternatively, if the subscription request in S405a does not carry the notification indication, the NWDAF network element may determine specific time to send the notification message to feed back the QoS information. For example, after inferring out the abnormal UE, the NWDAF network element may immediately feed back the QoS information of the abnormal UE to the AF.

In addition, optionally, the AF network element may directly subscribe to and obtain, from the UPF network element, the information about the UE whose network status information is abnormal in the N2 UEs without using the NWDAF network element. This is not limited in this embodiment of this application.

S406: The AF network element obtains network status information of N3 UEs, where the candidate range includes the N3 UEs, the N3 UEs do not include the N2 UEs, and N3 is a positive integer.

For example, FIG. 4 shows that the AF network element may subscribe to and obtain the network status information of the N3 UEs from the AMF network element and the OAM network element. It may be understood that the N3 UEs are UEs in the candidate range that do not participate in a process of training the federated learning model described in S404.

In an optional implementation, a value of N3 may be determined by the AF. For example, the AF may select, based on the weighted score of the UE in S403, first N3 UEs with higher scores from the UEs that do not participate in the training of the federated learning model, or the AF selects a group of UEs randomly from the UEs that do not participate in the training of the federated learning model. The AF may include, in the subscription message sent to the AMF and/or the OAM, information indicating a value range of N3. For example, a UE identifier list 1 (UE ID list 1) indicates the N3 UEs, and the AF may include the UE ID list 1 in the subscription message sent to the AMF and/or the OAM.

In another optional implementation, a number range corresponding to N3 may be predefined, or the AF indicates a value range of N3 in the subscription message. In this case, the AMF and/or the OAM may feed back network status information of a corresponding number of UEs to the AF based on the predefined number range corresponding to N3 or the value range of N3 indicated by the AF. For a specific implementation, refer to S401 and S402. Details are not described in this embodiment of this application again.

S407: The AF network element determines N4 UEs based on the information about the UE whose network status information is abnormal in the N2 UEs and the network status information of the N3 UEs, where the N4 UEs are configured to participate in update training of the federated learning model, and N4 is a positive integer.

In an optional implementation, the AF network element may determine weighted scores of the N3 UEs based on the network status information of the N3 UEs with reference to the scoring policy described in S403, and then determine the N4 UEs from the N3 UEs and a UE whose network status information is non-abnormal in the N2 UEs based on the weighted scores of the N3 UEs. For example, the N4 UEs include a UE other than N5 UEs whose network status information is abnormal in the N2 UEs and N6 UEs with higher weighted scores in the N3 UEs, where N5 and N6 are positive integers.

Specifically, numbers of UEs participating in different rounds of federated learning may be the same, that is, N4 is equal to N2. In this case, N6 may be equal to N5.

For example, it is assumed that the UE ID list 2 described in S405 includes 80 UEs, and network status information of 10 UEs in the 80 UEs is abnormal. The UE ID list 1 described in S406 correspondingly includes network status information of 20 UEs. The AF may score application layer information and network status information of the UEs in the UE ID list 1 by using the same algorithm as that in S403, to obtain a weighted score of each UE in the UE ID list 1. The AF may select 70 non-abnormal UEs in the UE ID list 2 and 10 UEs with higher weighted scores in the UE ID list 1 as the N4 UEs participating in the update training of the federated learning model.

Alternatively, numbers of UEs participating in different rounds of federated learning may be different, that is, N4 is not equal to N2. In this case, N6 may not be equal to N5.

For example, it is assumed that the UE ID list 2 described in S405 includes 80 UEs, and network status information of 10 UEs in the 80 UEs is abnormal. The UE ID list 1 described in S406 correspondingly includes network status information of 20 UEs. The AF may score application layer information and network status information of the UEs in the UE ID list 1 by using the same algorithm as that in S403, to obtain a weighted score of each UE in the UE ID list 1. The AF may select 70 non-abnormal UEs in the UE ID list 2 and 15 UEs with higher weighted scores in the UE ID list 1 as the N4 UEs participating in the update training of the federated learning model, and in this case, N4 is greater than N2. Alternatively, the AF may select 70 non-abnormal UEs in the UE ID list 2 and five UEs with higher weighted scores in the UE ID list 1 as the N4 UEs participating in the update training of the federated learning model, and in this case, N4 is less than N2.

In another optional implementation, the AF network element may determine weighted scores of the N3 UEs based on the network status information of the N3 UEs with reference to the scoring policy described in S403, and then determine the N4 UEs based on the weighted scores of the N3 UEs and the N2 UEs. In this implementation, the N4 UEs may include a part that is of the N2 UEs and whose network status information is abnormal.

For example, it is assumed that the UE ID list 2 described in S405 includes 80 UEs, and network status information of 30 UEs in the 80 UEs is abnormal. The UE ID list 1 described in S406 correspondingly includes network status information of 20 UEs. The AF may score application layer information and network status information of the UEs in the UE ID list 1 by using the same algorithm as that in S403, to obtain a weighted score of each UE in the UE ID list 1. It is assumed that weighted scores of 15 UEs in the 20 UEs correspondingly included in the UE ID list 1 are greater than or equal to 0.6. The AF may select 50 UEs that are non-abnormal in the UE ID list 2, a UE (for example, the 15 UEs) whose weighted score is greater than or equal to 0.6 in the UE ID list 1, and 15 UEs with smaller delay differences in the abnormal UEs in the UE ID list 2 as the N4 UEs participating in the update training of the federated learning model. The delay difference is an absolute value of a difference between an actual signal transmission delay of the abnormal UE and the second network status information threshold corresponding to a signal transmission delay. In this case, N4 is equal to N2. Certainly, it may be understood that N4 may not be equal to N2. This is not limited in this embodiment of this application.

S408: The AF network element performs update training of the federated learning model with the N4 UEs.

Specifically, refer to step 1 to step 4 described in a related technology for implementation. Details are not described in this embodiment of this application again.

In solution 1 provided in this embodiment of this application, the AF network element requests and obtains the network status information of the candidate UE from the SGC NF (such as the AMF) network element or the OAM network element. In a federated learning environment, this helps an application side to select, by using the network status information of the UE, a UE participating in the training or the update of the federated learning model, and an algorithm for selecting a participant based on the application layer information is optimized, thereby improving training efficiency of the federated learning model. In addition, it may be understood that in the federated learning environment, the AF may also be referred to as an FLAF.

### Solution 2

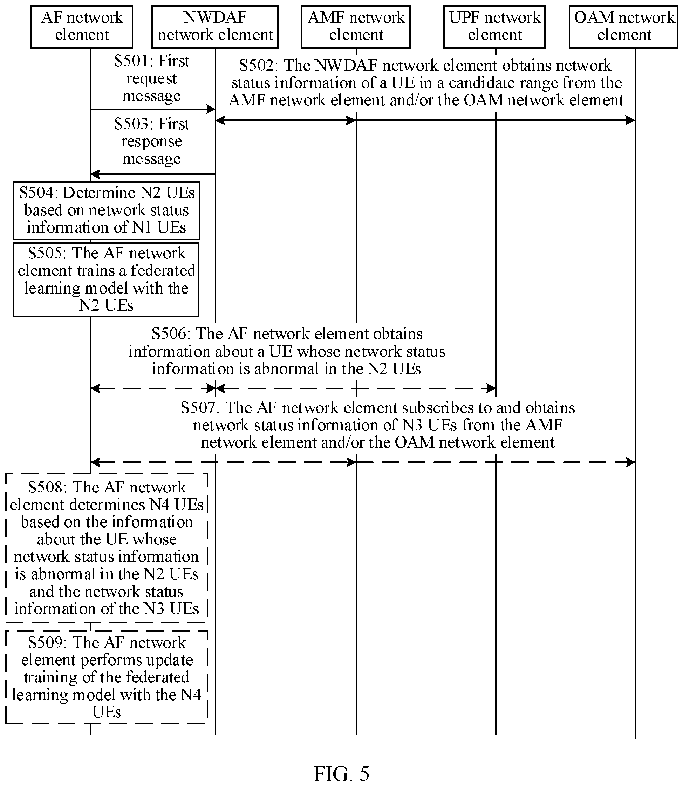

FIG. 5 shows a communication method. The method includes the following procedures.

S501: An AF network element sends a first request message to an NWDAF network element, where the first request message is used to request network status information of a UE in a candidate range.

For a definition of the candidate range, refer to the descriptions in S401 for understanding. Details are not described in this embodiment of this application again.

Specifically, the first request message may be a subscription message. For example, the AF network element sends the subscription message to the NWDAF by using an Nnwdaf_AnalyticsSubscription_Subscribe service operation, and a parameter carried in the subscription message includes an analytics identifier (Analytics ID). Analytics ID=UE Network Status Information represents that the AF network element expects to subscribe to and obtain, from the NWDAF, the network status information of the UE that is obtained by the NWDAF through analysis, for example, a comparison analysis result between the network status information of the UE and a specified threshold or network status information of another UE. The subscription message further includes that information indicating the candidate range may be an identifier of the candidate range. For example, a range of UEs represents a specified network area, and a list of UE IDs represents a list of candidate terminal devices.

Optionally, the subscription message may further carry a number range indication, for example, the first indication information or the range of UE number (range of UE number) described in S401. Optionally, the subscription message may further carry the data validity indication or the joint validity indication described in S401. Optionally, the subscription message may further carry the performance indication information and/or the first network status information threshold described in S401.

In addition, when the AF is a third-party application function, for security purposes, interaction between the AF and the NWDAF needs to be performed via an NEF. The NEF controls a mapping relationship between an AF identifier and Analytics ID that is allowed to be obtained, and a related inbound limit (namely, a limit of Analytics ID that can be requested by the AF) and outbound limit (namely, a limit of Analytics ID that the AF can be notified of). For example, when the third-party AF needs to subscribe to network status information from the NWADF, the third-party AF needs to first send a subscription message to the NEF, and then the NEF sends the subscription message to the NWADF. Subsequently, an AMF first sends network status information of a related UE to the NEF, and then the NEF sends the network status information to the third-party AF.

S502: The NWDAF network element obtains the network status information of the UE in the candidate range from the AMF network element and/or an OAM network element.

Specifically, the NWDAF may subscribe to and obtain network status information of a part or all of UEs in the candidate range from the AMF network element and/or the OAM network element in a subscription manner. For example, if the AMF network element/OAM network element can identify a UE in a non-connected state, the AMF network element/OAM network element may provide the network status information of all of the UEs in the candidate range, where network status information of the UE in the non-connected state indicates that the UE is in an idle state or a deactivated state. If the AMF network element/OAM network element cannot identify a UE in a non-connected state in the candidate range, the AMF network element/OAM network element may provide the network status information of the part of the UEs in the candidate range, or it is understood that the AMF network element/OAM network element may provide network status information of all UEs whose network status information can be obtained in the candidate range. Herein, all the UEs whose network status information can be obtained is in a connected state. For that the NWDAF may obtain the network status information of the UE in the subscription manner, refer to S401 and S402 for implementation. Details are not described in this embodiment of this application again.

S503: The NWDAF network element sends a first response message to the AMF network element, where the first response message includes network status information of N1 UEs.

For a definition of the N1 UEs, refer to S402 for understanding. Details are not described in this embodiment of this application again.

Specifically, the NWDAF network element may analyze the network status information of the N1 UEs obtained from the AMF network element/OAM network element, and include, in the first response message, the network status information that is of the N1 UEs and that is analyzed by the NWDAF network element. Alternatively, it may be described as: If the first request message carries Analytics ID, the network status information of the N1 UEs carried in the first response message may be network status information obtained by the NWDAF network element through analysis, for example, a comparison analysis result between the network status information of the UE and a specified threshold or network status information of another UE, for another example, network status information of the UE in a specific time period or in a specific area.

For example, the NWDAF may sort the UE network status information historically obtained from the AMF/OAM into a historical data set for statistical analysis, to obtain a statistical feature of the historical data set. The NWDAF obtains a predicted analysis result based on the statistical feature of the historical data set, and the NWDAF may include the predicted analysis result in the first response message and send the first response message to the AF, to assist the AF in selecting a UE participating in training of a model. Alternatively, the NWDAF may train an AI model by using the obtained historical data set, and infer out the predicted analysis result by using the AI model.

The following lists some network status information that is of the UE and that is obtained by the NWDAF through analysis, including one or more of the following analysis results.

Analysis result of a connection state of the UE: The NWDAF may provide statistics information of the connection state of the UE, for example, specific UEs that are in the connected state and specific UEs that are in the idle state in a range (such as an area/slice/DNN/App ID) or a time period specified by the AF. The NWDAF may provide prediction information of the connection state of the UE, for example, specific UEs that are currently in the idle state but enter the connected state in the range or the time period specified by the AF.

Analysis result of reachability of the UE: The NWDAF may provide statistics information of the reachability of the UE, for example, specific UEs in the idle state that are reachable and specific UEs in the idle state that are unreachable in a range (such as an area/slice/DNN/App ID) or a time period specified by the AF. The NWDAF may provide prediction information of the reachability of the UE, for example, specific UEs that are currently unreachable but become reachable in the range or the time period specified by the AF.

Analysis result of mobility of the UE: The NWDAF may provide statistics information of the mobility of the UE, for example, a mobility mode and a mobility trend of the UE in a range (such as an area/slice/DNN/App ID) or a time period specified by the AF. The NWDAF may provide prediction information of the mobility of the UE, for example, specific UEs that move into a service area, specific UEs that move out of the service area, specific UEs that move frequently, and specific UEs that become relatively fixed in the range or the time period specified by the AF.

Analysis result of a radio channel condition of the UE: The NWDAF may provide statistics information of the radio channel condition of the UE, for example, specific UEs that have good received signal quality and specific UEs that have average received signal quality in a range (such as an area/slice/DNN/App ID) or a time period specified by the AF. The NWDAF may provide prediction information of the radio channel condition of the UE, for example, connection states of specific UEs that become relatively stable and connection stability of specific UEs that become poor in the range or the time period specified by the AF.

Analysis result of radio resource utilization corresponding to the UE: The NWDAF may provide statistics information of the radio resource utilization of the UE, for example, specific UEs that have more available radio time/frequency resources and specific UEs that have less available radio resources and are in a cell whose service is busy in a range (such as an area/slice/DNN/App ID) or a time period specified by the AF. The NWDAF may provide prediction information of the radio resource utilization of the UE, for example, specific UEs that have more available radio time/frequency resources and a service of a cell of specific UEs become busy in the range or the time period specified by the AF (for example, during off-duty time at night).

Specifically, the first response message may be a notification message. For example, the NWDAF sends the notification message to the AF by using an Nnwdaf_AnalyticsSubscription_Notify service operation, and the notification message carries: Analytics ID and the network status information of the N1 UEs. For example, when the notification message carries Analytics ID, the network status information of the UE may also be understood as a statistical or predicted analysis result (UE network status related analytics) of a network status of the UE. Optionally, the notification message may further carry Collected UE network status information, indicating that the NWDAF forwards, to the AF, the original network status information obtained from the AMF/OAM.

S504: The AF network element determines N2 UEs based on the network status information of the N1 UEs.

For a definition of the N2 UEs, refer to the manner described in S403 for implementation. Details are not described in this embodiment of this application again.

Specifically, the AF network element may determine the N2 UEs based only on the network status information of the N1 UEs through data analytics or by using a specific algorithm. Alternatively, the AF network element may determine the N2 UEs based on the network status information of the N1 UEs and application layer information of the N1 UEs. For example, an existing application layer algorithm is optimized by using the network status information of the UEs. Alternatively, a new algorithm is designed with reference to the network status information and the application layer information of the UEs, and the N2 UEs are determined by using the new algorithm.

In an example, it is assumed that the network status information of the N1 UEs is a statistical or predicted analysis result obtained by the NWDAF through analysis. For example, the AF network element determines the N2 UEs based on the network status information of the N1 UEs and the application layer information of the N1 UEs. This embodiment of this application provides a specific implementation of determining the N2 UEs.

It is assumed that N1 is 100 and N2 is 80. To be specific, the AF network element obtains application layer information and network status information of 100 UEs, and prepares to select 80 UEs from the 100 UEs to participate in training of a federated learning model. First, the AF network element may score each UE based on application layer information of the UE and a specified application layer algorithm, to obtain application layer scores corresponding to the 100 UEs. The scores are UE1_app=0.7, UE2_app=0.5, UE3_app=0.9, ..., and UE100_app=0.75. The AF can score each UE based on a predicted connection state of the UE. For example, "0.9" represents the connected state, and "0.1" represents the idle state. Predicted connection state scores corresponding to the 100 UEs are obtained. The scores are UE1_CMstate=0.9, UE2_CMstate=0.1, UE3_CMstate=0.1, ..., and UE100_ CMstate=0.9. The AF scores each UE based on predicted reachability information of the UE. For example, "0.9" represents that the UE is reachable, and "0.1" represents that the UE is unreachable. It may be understood that a UE in the idle state may be reachable. Predicted reachability scores corresponding to the 100 UEs are obtained. The scores are, for example, UE1_ reachable=0.9, UE2_ reachable=0.9, UE3_reachable=0.1, ..., and UE100_reachable=0.9. The AF scores each UE based on predicted mobility of the UE. For example, the AF calculates a mobility score of the UE based on a location and a moving speed of the UE, to obtain predicted mobility scores corresponding to the 100 UEs. The scores are UE1_mobility=0.65, UE2_mobility=0.7, UE3_mobility=0.3, ..., and UE100_mobility=0.95. The AF scores each UE based on a predicted radio channel condition of the UE, to obtain radio channel condition scores corresponding to the 100 UEs. The scores are UE1_radiochannel=0.85, UE2_radiochannel=0.5, UE3_radiochannel=0.6, ..., and UE100_radiochannel=0.7. The AF scores each UE based on predicted radio resource utilization of the UE, to obtain radio resource utilization scores corresponding to the 100 UEs. The scores are UE1_radioresource=0.8, UE2_radioresource=0.4, UE3_radioresource=0.7, ..., and UE100_radioresource=0.55.

Second, the AF sets a weight for each parameter based on an importance degree of each parameter indicated by the network status information. For example, a weight of the application layer information is set to UE_app_weight=0.3, a weight of the connection state is set to UE_CMstate_weight=0.2, a weight of the reachability is set to UE_reachable_weight=0.1, a weight of the mobility is set to UE_mobility_weight=0.2, a weight of the radio channel condition is set to UE_radiochannel_weight=0.1, and a weight of the radio resource utilization is set to UE_radioresource_weight=0.1.

Finally, the AF may calculate a weighted score of each UE based on the scores and the weights, for example, UE1_score=0.7*0.3+0.9*0.2+0.9*0.1+0.65*0.2+0.85*0.1+0.8*0.1=0.775. Similarly, the AF may calculate weighted scores of the other UEs, then sort the weighted scores of all UEs, and select 80 UEs with higher scores from the UEs as UEs participating in the training of the federated learning model.

S505: The AF network element trains the federated learning model with the N2 UEs.

Specifically, refer to step 1 to step 4 described in a related technology for implementation. Details are not described in this embodiment of this application again.

Further, for understanding of update training of the federated learning model, refer to the descriptions in solution 1. Details are not described in this embodiment of this application again. In an example, the following S506 to S509 are shown by dashed lines in FIG. 5, to reflect a process of the update training of the federated learning model.

S506: The AF network element obtains information about a UE whose network status information is abnormal in the N2 UEs.

S507: The AF network element subscribes to and obtains network status information of N3 UEs from the AMF network element and/or the OAM network element, where the candidate range includes the N3 UEs, the N3 UEs do not include the N2 UEs, and N3 is a positive integer.

S508: The AF network element determines N4 UEs based on the information about the UE whose network status information is abnormal in the N2 UEs and the network status information of the N3 UEs, where the N4 UEs are configured to participate in the update training of the federated learning model, and N4 is a positive integer.

S509: The AF network element performs update training of the federated learning model with the N4 UEs.

In solution 2 provided in this embodiment of this application, the AF requests and obtains, from the NWDAF, a statistical or predicted analysis result related to the network status information of the candidate UE. In a federated learning environment, this helps an application side to select, by using the network status information of the UE, a UE participating in the training or the update of the federated learning model, and an algorithm for selecting a participant based on the application layer information is optimized, thereby improving training efficiency of the federated learning model. In addition, it may be understood that in the federated learning environment, the AF may also be referred to as an FL AF.

### Solution 3

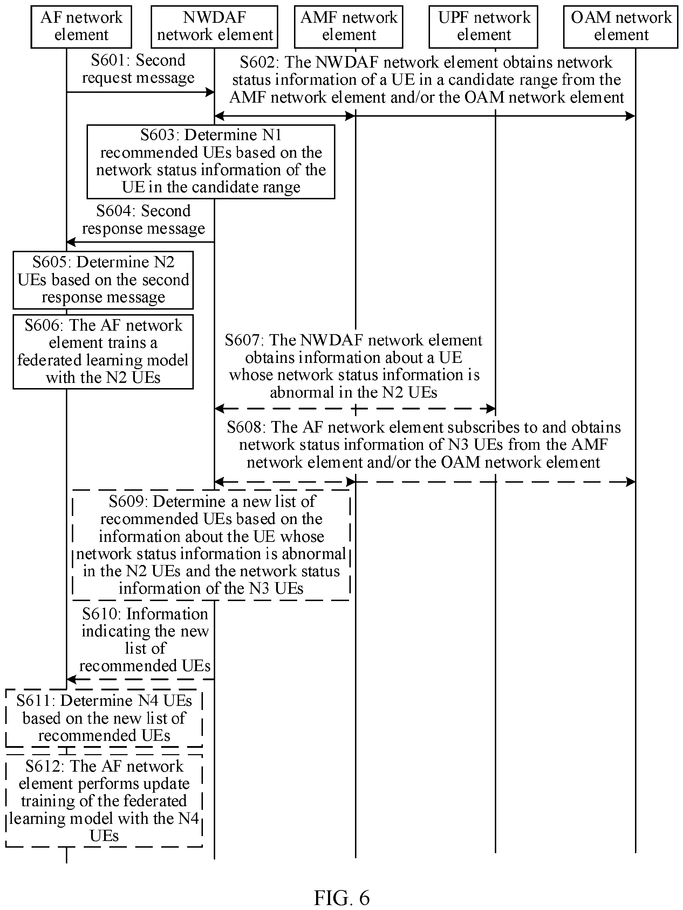

FIG. 6 shows a communication method. The method includes the following procedures.

S601: An AF network element sends a second request message to an NWDAF network element, where the second request message is used to request a recommended terminal device to participate in training of a federated learning model in a candidate range.

For a definition of the candidate range, refer to the descriptions in S401 for understanding. Details are not described in this embodiment of this application again.

Specifically, the second request message may be a subscription message. For example, the AF network element sends the subscription message to the NWDAF by using an Nnwdaf_AnalyticsSubscription_Subscribe service operation. A parameter carried in the subscription message includes an analytics identifier (Analytics ID). Analytics ID=Recommended UE Information represents that the AF network element expects to subscribe to and obtain, from the NWDAF, an identifier of the terminal device recommended by the NWDAF to participate in the training of the federated learning model. The subscription message further includes that information indicating the candidate range may be an identifier of the candidate range. For example, a range of UEs represents a specified network area, and a list of UE IDs represents a list of candidate terminal devices. Optionally, the subscription message may further carry a number range indication, for example, the first indication information or the range of UE number (range of UE number) described in S401. Optionally, the subscription message may further carry the data validity indication or the joint validity indication described in S401.

In addition, when the AF is a third-party application function, for security purposes, interaction between the AF and the NWDAF needs to be performed via an NEF. The NEF controls a mapping relationship between an AF identifier and Analytics ID that is allowed to be obtained, and a related inbound limit (namely, a limit of Analytics ID that can be requested by the AF) and outbound limit (namely, a limit of Analytics ID that the AF can be notified of). For example, when the third-party AF needs to subscribe to network status information from the NWADF, the third-party AF needs to first send a subscription message to the NEF, and then the NEF sends the subscription message to the NWADF. Subsequently, an AMF first sends network status information of a related UE to the NEF, and then the NEF sends the network status information to the third-party AF.

S602: The NWDAF network element obtains network status information of the UE in the candidate range from the AMF network element and/or an OAM network element.

Specifically, refer to the implementation of S502. Details are not described in this embodiment of this application again.

S603: The NWDAF network element determines N1 recommended UEs based on the obtained network status information of the UE in the candidate range, where the UE in the candidate range includes the N1 UEs, and N1 is a positive integer.

Specifically, the NWDAF network element performs statistical analysis based on the obtained original network status information of the UE in the candidate range, to obtain a statistical or predicted analysis result of a network status of the UE. Further, the NWDAF network element may set different weights for different network statuses of the UEs with reference to the scoring policy described in S504, and then preferentially use, in an order of weighted sums, a UE with a higher weighted score as the recommended UE.

S604: The NWDAF network element sends a second response message to the AF network element, where the second response message includes information indicating the N1 recommended terminal devices.

Specifically, the second response message is a notification message. For example, the NWDAF may send the notification message to the FL AF by using an Nnwdaf_AnalyticsSubscription_Notify service operation. The notification message may carry the following parameters: an analytics identifier (Analytics ID), where Analytics ID=Recommended UE Information in this embodiment of this application; and a recommended UE list (Recommended UE list), which indicates the N1 UEs recommended by the NWDAF in S603, and may be indicated by a group of UE identifiers.

Optionally, the NWDAF network element may send the original network status information of the N1 UEs obtained in S602 to the AF. For example, the NWDAF network element may include Collected UE network status information in the notification message, to represent the original network status information of the UEs.

S605: The AF network element determines N2 UEs based on the second response message, where the N2 UEs are configured to participate in the training of the federated learning model, the N1 UEs include the N2 UEs, and N2 is a positive integer.

In an optional implementation, the AF network element may directly determine the N1 UEs recommended by the NWDAF as the UE participating in the training of the federated learning model. In this case, N1 is equal to N2.

In another optional implementation, if the NWDAF includes the original network status information of the N1 UEs in the second response message, the AF network element may select, based on the original network status information of the N1 UEs, a part or all of the N1 UEs to participate in the training of the federated learning model. For example, the AF network element may select a part that is of the N1 UEs and whose original network status information is better to participate in the training of the federated learning model, or the AF network element may select a UE whose original network status information is greater than or equal to a first network status information threshold in the N1 UEs to participate in the training of the federated learning model.

S606: The AF network element trains the federated learning model with the N2 UEs.

Specifically, refer to step 1 to step 4 described in a related technology for implementation. Details are not described in this embodiment of this application again.

Further, for understanding of update training of the federated learning model, refer to the descriptions in solution 1. Details are not described in this embodiment of this application again. In an example, the following S607 to S612 are shown by dashed lines in FIG. 6, to reflect a process of the update training of the federated learning model.

S607: The NWDAF network element obtains information about a UE whose network status information is abnormal in the N2 UEs.

Specifically, FIG. 6 shows that the NWDAF network element obtains, from a UPF network element, the information about the UE whose network status information is abnormal in the N2 UEs.

Optionally, the NWDAF may send second indication information to the UPF network element, where the second indication information indicates to monitor network status information of the N2 UEs. Further, when determining that there is the UE whose network status information is abnormal in the N2 UEs, the UPF network element sends, to the NWDAF network element, the information about the UE whose network status information is abnormal in the N2 UEs.

S608: The NWDAF network element subscribes to and obtains network status information of N3 UEs from the AMF network element and/or the OAM network element, where the candidate range includes the N3 UEs, the N3 UEs do not include the N2 UEs, and N3 is a positive integer.

Specifically, FIG. 6 shows that the NWDAF network element obtains the network status information of the N3 UEs from the AMF network element and/or the OAM network element.

S609: The NWDAF network element determines a new recommended UE list based on the information about the UE whose network status information is abnormal in the N2 UEs and the network status information of the N3 UEs, where the new recommended UE list includes a plurality of UEs.

Specifically, the NWDAF network element may determine the new recommended UE list with reference to the solution described in S407. For example, the new recommended UE list includes a UE other than the UE whose network status information is abnormal in the N2 UEs, and a part of the N3 UEs. For another example, the new recommended UE list includes a part of the N2 UEs and a part of the N3 UEs, and the new recommended UE list may include the UE whose network status information is abnormal.

S610: The NWDAF network element sends, to the AF network element, information indicating the new recommended UE list.

Optionally, the NWDAF may further send, to the AF network element, network status information of each UE in the new recommended UE list.

S611: The AF network element determines N4 UEs based on the new recommended UE list, where the N4 UEs are configured to participate in the update training of the federated learning model, N4 is a positive integer, and the N4 UEs include a part or all of the UEs in the recommended UE list.

S612: The AF network element performs update training of the federated learning model with the N4 UEs.

In solution 3 provided in this embodiment of this application, the NWDAF may derive, by using the network status information of the UE, the UE recommended to participate in the training or the update of the federated learning model. In a federated learning environment, the AF may subscribe to the recommended UE from the NWDAF, to assist an application side in selecting the UE participating in the training or the update of the federated learning model, and an algorithm for selecting a participant based on application layer information is optimized, thereby improving training efficiency of the federated learning model. In addition, it may be understood that in the federated learning environment, the AF may also be referred to as an FL AF.

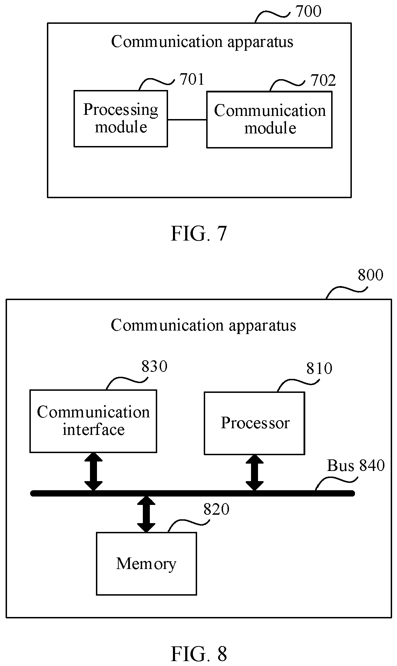

Refer to FIG. 7. Based on a same concept, an embodiment of this application provides a communication apparatus 700. The communication apparatus 700 includes a processing module 701 and a communication module 702. The communication apparatus 700 may be an AF network element, or may be a communication apparatus that is used in the AF network element or used with the AF network element in a matching manner and that can implement a communication method performed by the AF network element side. Alternatively, the communication apparatus 700 may be an NWDAF network element, or may be a communication apparatus that is used in the NWDAF network element or used with the NWDAF network element in a matching manner and that can implement a communication method performed by the NWDAF network element side. Alternatively, the communication apparatus 700 may be an AMF network element (or an OAM network element, a UPF network element, or the like), or may be a communication apparatus that is used in the AMF network element or used with the AMF network element in a matching manner and that can implement a communication method performed by the AMF network element side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of a related network element in the foregoing method. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit.

For example, when the communication apparatus 700 is used in the AF network element, the processing module 701 may be configured to implement a processing function of the AF network element in the example in FIG. 4, FIG. 5, or FIG. 6, and the communication module 702 may be configured to implement a receiving and sending function of the AF network element in the example in FIG. 4, FIG. 5, or FIG. 6. Alternatively, the communication apparatus may be understood with reference to the possible design in the fourth aspect in the summary.

When the communication apparatus 700 is used in the AMF or the OAM network element, the processing module 701 may be configured to implement a processing function of the AMF or the OAM network element in the example in FIG. 4, FIG. 5, or FIG. 6, and the communication module 702 may be configured to implement a receiving and sending function of the AMF or the OAM network element in the example in FIG. 4, FIG. 5, or FIG. 6. Alternatively, the communication apparatus may be understood with reference to the possible design in the fifth aspect in the summary.

For example, when the communication apparatus 700 is used in the NWDAF network element, the processing module 701 may be configured to implement a processing function of the NWDAF network element in the example in FIG. 4, FIG. 5, or FIG. 6, and the communication module 702 may be configured to implement a receiving and sending function of the NWDAF network element in the example in FIG. 4, FIG. 5, or FIG. 6. Alternatively, the communication apparatus may be understood with reference to the possible design in the sixth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the communication apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

Module division in embodiments of this application is an example, and is merely logical function division. During actual implementation, there may be another division manner. In addition, functional modules in the examples in embodiments of this application may be integrated into one processor, or may exist alone physically, or two or more modules may be integrated into one module. The integrated module may be implemented in a form of hardware, or may be implemented in a form of a software functional module.

Based on a same technical concept, an embodiment of this application further provides a communication apparatus 800. For example, the communication apparatus 800 may be a chip or a chip system. Optionally, in this embodiment of this application, the chip system may include a chip, or may include a chip and another discrete component.

The communication apparatus 800 may be configured to implement a function of any network element in the communication system described in the foregoing example. The communication apparatus 800 may include at least one processor 810. The processor 810 is coupled to a memory. Optionally, the memory may be located in the communication apparatus, the memory may be integrated with the processor, or the memory may be located outside the communication apparatus. For example, the communication apparatus 800 may further include at least one memory 820. The memory 820 stores a necessary computer program, a computer program or instructions, and/or data for implementing any one of the foregoing examples. The processor 810 may execute the computer program stored in the memory 820, to complete the method in any one of the foregoing examples.

The communication apparatus 800 may further include a communication interface 830, and the communication apparatus 800 may exchange information with another device through the communication interface 830. For example, the communication interface 830 may be a transceiver, a circuit, a bus, a module, a pin, or a communication interface of another type. When the communication apparatus 800 is a chip-type apparatus or circuit, the communication interface 830 in the communication apparatus 800 may further be an input/output circuit, and may input information (or referred to as receiving information) and output information (or referred to as sending information). The processor is an integrated processor, a microprocessor, an integrated circuit, or a logic circuit. The processor may determine the output information based on the input information.

The coupling in embodiments of this application is an indirect coupling or a communication connection between apparatuses, units, or modules in an electrical form, a mechanical form, or another form, and is used for information exchange between the apparatuses, the units, or the modules. The processor 810 may operate cooperatively with the memory 820 and the communication interface 830. A specific connection medium between the processor 810, the memory 820, and the communication interface 830 is not limited in this embodiment of this application.

Refer to FIG. 8. Optionally, the processor 810, the memory 820, and the communication interface 830 are connected to each other through a bus 840. The bus 840 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited herein. The memory in embodiments of this application may alternatively be a circuit or any other apparatus that can implement a storage function, and is configured to store the program instructions and/or the data.

In a possible implementation, the communication apparatus 800 may be used in an AF network element. Specifically, the communication apparatus 800 may be the AF network element, or may be an apparatus that can support the AF network element to implement a function of the AF network element in any one of the foregoing examples. The memory 820 stores a computer program (or instructions) and/or data for implementing the function of the AF network element in any one of the foregoing examples. The processor 810 may execute the computer program stored in the memory 820, to complete the method performed by the AF network element in any one of the foregoing examples. The communication apparatus 800 is used in the AF network element, and a communication interface in the communication apparatus 800 may be configured to interact with an AMF, an OAM, or an NWDAF network element, send information to the AMF, the OAM, or the NWDAF network element, or receive information from the AMF, the OAM, or the NWDAF network element.

In a possible implementation, the communication apparatus 800 may be used in an NWDAF network element. Specifically, the communication apparatus 800 may be the NWDAF network element, or may be an apparatus that can support the NWDAF network element to implement a function of the NWDAF network element in any one of the foregoing examples. The memory 820 stores a computer program (or instructions) and/or data for implementing the function of the NWDAF network element in any one of the foregoing examples. The processor 810 may execute the computer program stored in the memory 820, to complete the method performed by the NWDAF network element in any one of the foregoing examples. The communication apparatus 800 is used in the NWDAF network element, and a communication interface in the communication apparatus 800 may be configured to interact with an AMF, an OAM, or an AF network element, send information to the AMF, the OAM, or the AF network element, or receive information from the AMF, the OAM, or the AF network element.

In a possible implementation, the communication apparatus 800 may be used in an AMF/OAM network element. Specifically, the communication apparatus 800 may be the AMF/OAM network element, or may be an apparatus that can support the AMF/OAM network element to implement a function of the AMF/OAM network element in any one of the foregoing examples. The memory 820 stores a computer program (or instructions) and/or data for implementing the function of the AMF/OAM network element in any one of the foregoing examples. The processor 810 may execute the computer program stored in the memory 820, to complete the method performed by the AMF/OAM network element in any one of the foregoing examples. The communication apparatus 800 is used in the AMF/OAM network element, and a communication interface in the communication apparatus 800 may be configured to interact with an AF network element or an NWDAF network element, send information to the AF network element or the NWDAF network element, or receive information from the AF network element or the NWDAF network element.

Based on the foregoing examples, an embodiment of this application provides a communication system, including a UE, an AF network element, an NWDAF network element, an AMF network element, and an OAM network element. Optionally, a UPF network element is included. The AF network element, the NWDAF network element, the AMF network element, and the OAM network element may implement the communication method provided in the example shown in FIG. 4, FIG. 5, or FIG. 6.

All or a part of the technical solutions provided in embodiments of this application may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, a UE, an AF network element, an NWDAF network element, an AMF network element, an OAM network element, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical conflict, examples may be mutually referenced. For example, methods and/or terms in method examples may be mutually referenced. For example, functions and/or terms in apparatus examples may be mutually referenced. For example, functions and/or terms in the apparatus examples and the method examples may be mutually referenced.

Certainly, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, comprising:
sending, by an application function network element, a first request message, wherein the first request message is used to request network status information of a terminal device in a candidate range;
obtaining, by the application function network element, a first response message, wherein the first response message comprises network status information of N1 terminal devices, the terminal device in the candidate range comprises the N1 terminal devices, and N1 is a positive integer; and
determining, by the application function network element, N2 terminal devices based on the network status information of the N1 terminal devices, wherein the N2 terminal devices are configured to participate in training of a federated learning model, the N1 terminal devices comprise the N2 terminal devices, and N2 is a positive integer.

2. The communication method according to claim 1, wherein the first request message comprises information indicating the candidate range, and the candidate range comprises a specified network area or a list of candidate terminal devices.

3. The communication method according to claim 1 or 2, wherein the first request message comprises first indication information, and the first indication information indicates that a value of N1 falls within a specified number range.

4. The communication method according to claim 1 or 2, wherein the first request message comprises a value range of N1.

5. The communication method according to claim 1 or 2, wherein the network status information of the N1 terminal devices is greater than or equal to a first network status information threshold.

6. The communication method according to any one of claims 1 to 5, wherein the determining, by the application function network element, N2 terminal devices based on the network status information of the N1 terminal devices comprises:
determining, by the application function network element, the N2 terminal devices based on the network status information of the N1 terminal devices and application layer information of the N1 terminal devices.

7. The communication method according to any one of claims 1 to 6, further comprising:
obtaining, by the application function network element, information about a terminal device whose network status information is abnormal in the N2 terminal devices;
obtaining, by the application function network element, network status information of N3 terminal devices, wherein the candidate range comprises the N3 terminal devices, the N3 terminal devices do not comprise the N2 terminal devices, and N3 is a positive integer; and
determining, by the application function network element, N4 terminal devices based on the information about the terminal device whose network status information is abnormal in the N2 terminal devices and the network status information of the N3 terminal devices, wherein the N4 terminal devices are configured to participate in update training of the federated learning model, and N4 is a positive integer.

8. The communication method according to claim 7, wherein the N4 terminal devices comprise a terminal device other than the terminal device whose network status information is abnormal in the N2 terminal devices.

9. The communication method according to claim 7 or 8, wherein the obtaining, by the application function network element, information about a terminal device whose network status information is abnormal in the N2 terminal devices comprises:
sending, by the application function network element, second indication information to a network data analytics function network element, wherein the second indication information indicates to monitor network status information of the N2 terminal devices, the second indication information comprises a second network status information threshold, and the second network status information threshold is used to determine whether service traffic information of the terminal device is abnormal; and
obtaining, by the application function network element from the network data analytics function network element, the information about the terminal device whose network status information is abnormal in the N2 terminal devices.

10. The communication method according to any one of claims 1 to 9, further comprising:
training, by the application function network element, the federated learning model with the N2 terminal devices.

11. A communication method, comprising:
obtaining, by an access and mobility management function network element, a first request message, wherein the first request message is used to request network status information of a terminal device in a candidate range; and
sending, by the access and mobility management function network element, a first response message, wherein the first response message comprises network status information of N1 terminal devices, the terminal device in the candidate range comprises the N1 terminal devices, and N1 is a positive integer.

12. The communication method according to claim 11, wherein the first request message comprises information indicating the candidate range, and the candidate range comprises a specified network area or a list of candidate terminal devices.

13. The communication method according to claim 11 or 12, wherein the first request message comprises first indication information, and the first indication information indicates that a value of N1 falls within a specified number range.

14. The communication method according to claim 11 or 12, wherein the first request message comprises a value range of N1.

15. The communication method according to claim 11 or 12, wherein the network status information of the N1 terminal devices is greater than or equal to a first network status information threshold.

16. The communication method according to any one of claims 11 to 15, further comprising:
sending, by the access and mobility management function network element, network status information of N3 terminal devices, wherein the candidate range comprises the N3 terminal devices, the N3 terminal devices do not comprise N2 terminal devices, and N3 is a positive integer.

17. A communication method, comprising:
obtaining, by a network data analytics function network element, a first request message, wherein the first request message is used to request network status information of a terminal device in a candidate range;
obtaining, by the network data analytics function network element, the network status information of the terminal device in the candidate range from an access and mobility management function network element and/or an operation, administration, and maintenance network element; and
sending, by the network data analytics function network element, a first response message, wherein the first response message comprises network status information of N1 terminal devices, the terminal device in the candidate range comprises the N1 terminal devices, and N1 is a positive integer.

18. The communication method according to claim 17, wherein the first request message comprises information indicating the candidate range, and the candidate range comprises a specified network area or a list of candidate terminal devices.

19. The communication method according to claim 17 or 18, wherein the first request message comprises first indication information, and the first indication information indicates that a value of N1 falls within a specified number range.

20. The communication method according to claim 17 or 18, wherein the first request message comprises a value range of N1.

21. The communication method according to claim 17 or 18, wherein the network status information of the N1 terminal devices is greater than or equal to a first network status information threshold.

22. The communication method according to any one of claims 17 to 21, further comprising:
receiving, by the network data analytics function network element, second indication information from an application function network element, wherein the second indication information indicates to monitor network status information of N2 terminal devices, the second indication information comprises a second network status information threshold, and the second network status information threshold is used to determine whether service traffic information of the terminal device is abnormal; and
sending, by the network data analytics function network element to the application function network element, information about a terminal device whose network status information is abnormal in the N2 terminal devices.

23. The communication method according to any one of claims 1 to 22, wherein the first request message comprises an event identifier indicating a type of the network status information, and the event identifier comprises location report information.

24. A communication method, comprising:
sending, by an application function network element, a second request message, wherein the second request message is used to request a recommended terminal device to participate in training of a federated learning model in a candidate range;
obtaining, by the application function network element, a second response message, wherein the second response message comprises N1 recommended terminal devices, the terminal device in the candidate range comprises the N1 terminal devices, and N1 is a positive integer; and
determining, by the application function network element based on the second response message, N2 terminal devices to participate in the training of the federated learning model, the N1 terminal devices comprise the N2 terminal devices, and N2 is a positive integer.

25. A communication method, comprising:
receiving, by a network data analytics function network element, a second request message, wherein the second request message is used to request a recommended terminal device to participate in training of a federated learning model in a candidate range;
determining, by the network data analytics function network element, the recommended terminal device to participate in the training of the federated learning model in the candidate range; and
sending, by the network data analytics function network element, a second response message, wherein the second response message comprises N1 recommended terminal devices, the terminal device in the candidate range comprises the N1 terminal devices, and N1 is a positive integer.

26. The communication method according to claim 25, wherein the determining, by the network data analytics function network element, the terminal device in the candidate range recommended to participate in the training of the federated learning model comprises:
obtaining, by the network data analytics function network element, network status information of the terminal device in the candidate range from an access and mobility management function network element and/or an operation, administration, and maintenance network element; and
determining, by the network data analytics function network element, the N1 recommended terminal devices based on the network status information of the terminal device in the candidate range.

27. A communication apparatus, comprising:
a communication module, configured to send a first request message, wherein the first request message is used to request network status information of a terminal device in a candidate range, wherein
the communication module is configured to obtain a first response message, wherein the first response message comprises network status information of N1 terminal devices, the terminal device in the candidate range comprises the N1 terminal devices, and N1 is a positive integer; and
a processing module, configured to determine N2 terminal devices based on the network status information of the N1 terminal devices, wherein the N2 terminal devices are configured to participate in training of a federated learning model, the N1 terminal devices comprise the N2 terminal devices, and N2 is a positive integer.

28. The communication apparatus according to claim 27, wherein the first request message comprises information indicating the candidate range, and the candidate range comprises a specified network area or a list of candidate terminal devices.

29. The communication apparatus according to claim 27 or 28, wherein the first request message comprises first indication information, and the first indication information indicates that a value of N1 falls within a specified number range.

30. The communication apparatus according to claim 27 or 28, wherein the first request message comprises a value range of N1.

31. The communication apparatus according to claim 27 or 28, wherein the network status information of the N1 terminal devices is greater than or equal to a first network status information threshold.

32. The communication apparatus according to any one of claims 27 to 31, wherein the processing module is specifically configured to:
determine the N2 terminal devices based on the network status information of the N1 terminal devices and application layer information of the N1 terminal devices.

33. The communication apparatus according to any one of claims 27 to 32, wherein
the communication module is further configured to obtain information about a terminal device whose network status information is abnormal in the N2 terminal devices, and obtain network status information of N3 terminal devices, wherein the candidate range comprises the N3 terminal devices, the N3 terminal devices do not comprise the N2 terminal devices, and N3 is a positive integer; and
the processing module is further configured to determine N4 terminal devices based on the information about the terminal device whose network status information is abnormal in the N2 terminal devices and the network status information of the N3 terminal devices, wherein the N4 terminal devices are configured to participate in update training of the federated learning model, and N4 is a positive integer.

34. The communication apparatus according to claim 33, wherein the N4 terminal devices comprise a terminal device other than the terminal device whose network status information is abnormal in the N2 terminal devices.

35. The communication apparatus according to claim 33 or 34, wherein the communication module is further configured to:
send second indication information to a network data analytics function network element, wherein the second indication information indicates to monitor network status information of the N2 terminal devices, the second indication information comprises a second network status information threshold, and the second network status information threshold is used to determine whether service traffic information of the terminal device is abnormal; and
obtain, from the network data analytics function network element, the information about the terminal device whose network status information is abnormal in the N2 terminal devices.

36. The communication apparatus according to any one of claims 27 to 35, wherein the processing module is further configured to train the federated learning model with the N2 terminal devices.

37. A communication apparatus, comprising:
a communication module, configured to obtain a first request message, wherein the first request message is used to request network status information of a terminal device in a candidate range; and
a processing module, configured to determine the network status information of the terminal device in the candidate range, wherein
the communication module is further configured to send a first response message, wherein the first response message comprises network status information of N1 terminal devices, the terminal device in the candidate range comprises the N1 terminal devices, and N1 is a positive integer.

38. The communication apparatus according to claim 37, wherein the first request message comprises information indicating the candidate range, and the candidate range comprises a specified network area or a list of candidate terminal devices.

39. The communication apparatus according to claim 37 or 38, wherein the first request message comprises first indication information, and the first indication information indicates that a value of N1 falls within a specified number range.

40. The communication apparatus according to claim 37 or 38, wherein the first request message comprises a value range of N1.

41. The communication apparatus according to claim 37 or 38, wherein the network status information of the N1 terminal devices is greater than or equal to a first network status information threshold.

42. The communication apparatus according to any one of claims 37 to 41, wherein the communication module is further configured to send network status information of N3 terminal devices, the candidate range comprises the N3 terminal devices, the N3 terminal devices do not comprise N2 terminal devices, and N3 is a positive integer.

43. A communication apparatus, comprising:
a communication module, configured to obtain a first request message, wherein the first request message is used to request network status information of a terminal device in a candidate range, wherein
the communication module is further configured to obtain the network status information of the terminal device in the candidate range from an access and mobility management function network element and/or an operation, administration, and maintenance network element; and
a processing module, configured to send a first response message by using the communication module, wherein the first response message comprises network status information of N1 terminal devices, the terminal device in the candidate range comprises the N1 terminal devices, and N1 is a positive integer.

44. The communication apparatus according to claim 43, wherein the first request message comprises information indicating the candidate range, and the candidate range comprises a specified network area or a list of candidate terminal devices.

45. The communication apparatus according to claim 43 or 44, wherein the first request message comprises first indication information, and the first indication information indicates that a value of N1 falls within a specified number range.

46. The communication apparatus according to claim 43 or 44, wherein the first request message comprises a value range of N1.

47. The communication apparatus according to claim 43 or 44, wherein the network status information of the N1 terminal devices is greater than or equal to a first network status information threshold.

48. The communication apparatus according to any one of claims 43 to 47, wherein the communication module is further configured to:
receive second indication information from an application function network element, wherein the second indication information indicates to monitor network status information of N2 terminal devices, the second indication information comprises a second network status information threshold, and the second network status information threshold is used to determine whether service traffic information of the terminal device is abnormal; and
send, to the application function network element, information about a terminal device whose network status information is abnormal in the N2 terminal devices.

49. The communication apparatus according to any one of claims 27 to 48, wherein the first request message comprises an event identifier indicating a type of the network status information, and the event identifier comprises location report information.

50. A communication apparatus, comprising:
a communication module, configured to send a second request message, wherein the second request message is used to request a recommended terminal device to participate in training of a federated learning model in a candidate range, wherein
the communication module is configured to obtain a second response message, wherein the second response message comprises N1 recommended terminal devices, the terminal device in the candidate range comprises the N1 terminal devices, and N1 is a positive integer; and
a processing module, configured to determine N2 terminal devices to participate in the training of the federated learning model based on the second response message, wherein the N1 terminal devices comprise the N2 terminal devices, and N2 is a positive integer.

51. A communication apparatus, comprising:
a communication module, configured to receive a second request message, wherein the second request message is used to request a recommended terminal device to participate in training of a federated learning model in a candidate range; and
a processing module, configured to determine the recommended terminal device to participate in the training of the federated learning model in the candidate range, wherein
the communication module is configured to send a second response message, wherein the second response message comprises N1 recommended terminal devices, the terminal device in the candidate range comprises the N1 terminal devices, and N1 is a positive integer.

52. The communication apparatus according to claim 51, wherein the processing module is specifically configured to:
obtain network status information of the terminal device in the candidate range from an access and mobility management function network element and/or an operation, administration, and maintenance network element by using the communication module; and
determine the N1 recommended terminal devices based on the network status information of the terminal device in the candidate range.

53. A communication apparatus, comprising a processor, wherein the processor is coupled to a memory, the memory is configured to store a program or instructions, and the processor is configured to invoke the program or the instructions stored in the memory, to perform the method according to any one of claims 1 to 26.

54. A chip system, wherein the chip system comprises at least one processor and an interface circuit, the interface circuit is coupled to the at least one processor, and the processor executes instructions to perform the method according to any one of claims 1 to 26.

55. A communication system, comprising:
an application function network element, wherein the application function network element is configured to perform the method according to any one of claims 1 to 10, 23, and 24; and
a network data analytics function network element and/or an access and mobility management function network element, configured to communicate with the application function network element.

56. A computer-readable storage medium, wherein the computer-readable storage medium stores instructions, and when the instructions are run on a computer, the computer is enabled to perform the method according to any one of claims 1 to 26.

57. A computer program product, comprising instructions, wherein when the instructions are run on a computer, the computer is enabled to perform the method according to any one of claims 1 to 26.
